# EUROPEAN PATENT APPLICATION

(11) **EP 4 037 422 A1**
(43) Date of publication of application: **03.08.2022**
(21) Application number: 20885147.7
(22) Date of filing: 04.11.2020
(51) Int. Cl.: H04W 76/10, H04W 76/30, H04W 60/00, H04W 88/18, H04W 28/22

(54) **METHOD AND DEVICE FOR PROVIDING SERVICE TO USER DEVICE BY USING NETWORK SLICE IN COMMUNICATION SYSTEM**

(30) Priority: 06.11.2019 KR 20190141249; 08.11.2019 KR 20190142950; 27.05.2020 KR 20200063933; 29.05.2020 KR 20200065080
(71) Applicant: Samsung Electronics Co., Ltd., Gyeonggi-do, 16677 (KR)
(72) Inventor: JEONG, Sangsoo, Suwon-si, Gyeonggi-do 16677 (KR); LEE, Hoyeon, Suwon-si, Gyeonggi-do 16677 (KR)
(74) Representative: Gulde & Partner
(86) International application number: PCT/KR2020/015329
(87) International publication number: WO 2021/091225

(57) **Abstract**

Provided in the present disclosure are a method and a device for providing a service to a user device by using a network slice in a communication system. A method according to one embodiment of the present disclosure can comprise the steps of: receiving, from a second network function device, management function configuration information about a first core network slice, including the quota of a first core network slice; reporting status information about the first core network slice to a third network function device on the basis of the management function configuration information; receiving, from the third network function device, parameters for controlling the status of the first core network slice; and controlling access of a terminal that is to use the first core network slice, on the basis of the status information about the first core network slice and the parameters for control.

## Description

### [Technical Field]

The disclosure relates to a method and a device for providing a service to a user device in a communication system and, in particular, a to method and a device for providing a service to a user device using a network slice in the case where at least a part of the communication system is configured as a network slice.

### [Background Art]

To meet the demand for wireless data traffic having increased since deployment of 4G communication systems, efforts have been made to develop an improved 5th generation (5G) or pre-5G communication system. Therefore, the 5G or pre-5G communication system is also called a "beyond 4G network" communication system or a "post long term evolution (post LTE)" system.

The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems.

In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multi-points (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have also been developed.

In line with the development of various IT (information technology) techniques, network equipment has evolved into a virtualized network function (NF, which may be used interchangeably with "network element" hereinafter) by applying virtualization technology, and the virtualized NFs may be implemented in software beyond physical limits to be installed/operated in various types of clouds or data centers (DCs). In particular, the NF may be freely expanded, scaled, initiated, or terminated depending on service requirements, a system capacity, and network loads. Even if these NFs are implemented in software, they must be driven in a physical configuration, for example, a predetermined device, so it should be noted that physical configurations are not excluded. In addition, NFs may be implemented only in a simple physical configuration, that is, hardware.

In order to support various services in these various network structures, a network slicing technology has been introduced. Network slicing is a technology for logically configuring a network as a set of network functions (NFs) to support a specific service and separating the same from other slices. One terminal may access two or more slices in the case of receiving various services.

### [Disclosure of Invention]

### [Technical Problem]

The disclosure provides a method and a device for providing services to a user device using a network slice in a communication system

### [Solution to Problem]

A method according to an embodiment of the disclosure is a method for providing a service from a first network function device of a communication system including a first core network slice to a user device through the first core network slice, which may include: receiving management function configuration information of a first core network slice, including a quota of the first core network slice, from a second network function device; reporting status information of the first core network slice to a third network function device, based on the management function configuration information; receiving parameters for controlling status of the first core network slice from the third network function device; and controlling access of a terminal that is to use the first core network slice, based on the status information of the first core network slice and the parameters for control.

A device according to an embodiment of the disclosure is a first network function device for providing a service to a user device through a first core network slice, which may include: a network interface configured to communicate with a second network function device, a third network function device, and respective network function devices of the first core network slice; a memory configured to store information for access control of the first core network slice; and a controller, and
the controller may be configured to
receive management function configuration information of the first core network slice, including a quota of the first core network slice, from the second network function device through the network interface, store the management function configuration information of the first core network slice in the memory, report status information of the first core network slice to the third network function device, based on the management function configuration information, through the network interface, receive parameters for controlling status of the first core network slice from the third network function device through the network interface, and control access of a terminal that is to use the first core network slice, based on the status information of the first core network slice and the parameters for control.

### [Advantageous Effects of Invention]

According to at least one of the embodiments of the disclosure, it is possible to efficiently provide services to a user device using a network slice in a communication system. For example, it is possible to determine whether or not to provide services to a user device for each network slice and determine a date rate, and this may be applied even if operators are different.

### [Brief Description of Drawings]

FIG. 1 is a diagram illustrating a wireless communication system according to an embodiment of the disclosure.
FIG. 2 is a diagram illustrating the configuration of a wireless communication system according to an embodiment of the disclosure.
FIG. 3 is a flowchart illustrating a procedure for performing session control for each network slice according to an embodiment of the disclosure.
FIG. 4 is a flowchart illustrating a procedure for performing session control for each network slice according to an embodiment of the disclosure.
FIG. 5 is a flowchart illustrating a procedure for performing session control for each network slice according to an embodiment of the disclosure.
FIG. 6 is a flowchart illustrating a procedure for performing session control for each network slice according to an embodiment of the disclosure.
FIG. 7 is a flowchart illustrating a procedure for performing session control for each network slice according to an embodiment of the disclosure.
FIG. 8 is a block diagram illustrating the configuration of an NF according to an embodiment of the disclosure.
FIG. 9 is a flowchart illustrating an operation between NFs according to an embodiment of the disclosure.
FIG. 10 illustrates the configuration of a wireless communication system according to various embodiments of the disclosure.
FIG. 11 is a signal flowchart of controlling a date rate in a network slice according to various embodiments of the disclosure.
FIG. 12 is a diagram illustrating an example of a configuration for controlling a date rate in a network slice according to an embodiment of the disclosure.
FIG. 13 is a diagram illustrating an operation for applying rate control in units of network slices in various embodiments of the disclosure.
FIG. 14 is a flowchart illustrating a case in which an SMF performs date rate control in units of network slices according to various embodiments of the disclosure.
FIG. 15 is a diagram illustrating an example of a connection between UPFs or between a UPF and an NG-RAN according to various embodiments of the disclosure.
FIG. 16 is a diagram illustrating a method for controlling a quota for each network slice in an environment in which a RAN is shared according to an embodiment of the disclosure.
FIG. 17 is a diagram illustrating a method for controlling a quota for each network slice in an environment in which a RAN is shared according to an embodiment of the disclosure.
FIG. 18 is a signal flowchart of controlling a quota for each network slice according to another embodiment of the disclosure.
FIG. 19 is a signal flowchart of controlling a quota for each network slice according to another embodiment of the disclosure.
FIG. 20 is a diagram illustrating an operation of roaming or exchanging network slice status information between operators according to an embodiment of the disclosure.

### [Mode for the Invention]

Hereinafter, embodiments of the disclosure will be described in detail with reference to the accompanying drawings. In describing the embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Further, the "unit" in the embodiments may include one or more processors.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In the following description, the disclosure will be described using terms and names defined in the standards for 5G, new radio (NR), and 3rd generation partnership project long term evolution (3GPP LTE) systems for the convenience of description. However, the disclosure is not limited by these terms and names, and may be applied in the same way to systems that conform other standards.

The following detailed description of embodiments of the disclosure will be mainly directed to the communication standards defined by 3GPP. However, based on determinations by those skilled in the art, the main idea of the disclosure may also be applied to other communication systems having similar technical backgrounds through some modifications without significantly departing from the scope of the disclosure.

In describing embodiments of the disclosure in detail, although vehicle communication services will be mainly targeted, the main gist of the disclosure is applicable to other services provided in the 5G network with slight modifications without significantly departing from the scope of the disclosure, and this may be possible through the judgment of the person skilled in the art of the disclosure. In other words, a ProSe layer described in the disclosure may indicate the entire layer for performing a control operation for device-to-device (D2D or ProSe:Proximity Service) communication services. This indicates the layer on an application service (AS) layer and transmitting and receiving signaling with the AS layer for a device-to-device communication connection.

For the 5G system, studies are being conducted to support a wider variety of services than the existing 4G system. For example, the most representative services of the 5G system include an enhanced mobile broadband (eMBB) service, an ultra-reliable and low latency communication (URLLC) service, a massive machine type communication (mMTC) service, an evolved multimedia broadcast/multicast service (eMBMS), and the like. Further, a system for providing the URLLC service may be referred to as a URLLC system, and a system for providing the eMBB service may be referred to as an eMBB system. In addition, the terms "service" and "system" may be used interchangeably.

Hereinafter, the disclosure relates to a method and a device for supporting various services in a wireless communication system. Specifically, the disclosure describes the technique for supporting various services by supporting mobility of a terminal in a wireless communication system.

Hereinafter, for the convenience of description, the objects exchanging information for access control and status management will be collectively referred to as NFs. For example, the NF may be at least one of an access and mobility management function (hereinafter referred to as AMF) device, a session management function (hereinafter referred to as SMF) device, and a network slice selection function (NSSF) device. However, the embodiments of the disclosure may also be applied in the same manner to the case where the NF is actually implemented as an instance (an AMF instance, an SMF instance, an NSSF instance, of the like). If the embodiments of the disclosure includes a plurality of steps, some steps may be omitted or performed in different sequences, or other operations may be included therein.

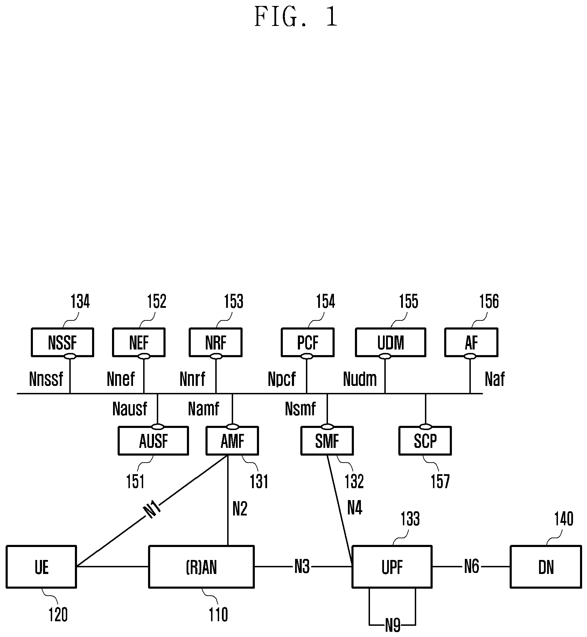

FIG. 1 is a diagram illustrating a wireless communication system according to an embodiment of the disclosure.

Referring to FIG. 1, as parts of nodes using radio channels in a wireless communication system, a base station (radio access node, RAN) 110 and a terminal (user equipment, UE) 120 are illustrated. Although FIG. 1 illustrates only one base station 110 and one terminal 120, other base stations identical to or similar to the base station 110 may be further included. In addition, FIG. 1 shows an example in which only one terminal 120 performs communication in one base station 110. However, it is obvious that a plurality of terminals may perform communication in one base station 110.

The base station 110 is a network infrastructure providing wireless connection to the terminal 120. The base station 110 has coverage defined as a specific geographic area based on the distance at which signals can be transmitted (not shown in FIG. 1). The base station 110 may be referred to as an "access point (AP)", an "eNodeB (eNB)", a "5G (5th generation) node", a "wireless point", a "transmission/reception point (TRP)", or other terms having an equivalent technical meaning, as well as the base station.

The terminal 120 is a device used by a user and communicates with the base station 110 through a radio channel. In some cases, the terminal 120 may be operated without involvement of a user. For example, the terminal 120, as a device performing machine-type communication (MTC), may not be carried by the user. The terminal 120 illustrated in FIG. 1 may include at least one portable user device and include at least one MTC. The terminal 120 in FIG. 1 may be referred to as a "terminal", a "mobile station", a "subscriber station", a "remote terminal", a "wireless terminal", a "user device", or other terms having an equivalent technical meaning.

Meanwhile, one specific NF in the following description may be understood as an NF device including a physical device. Even if a specific NF is implemented as an instance, since a physical device must be included, the corresponding NF instance may also be understood as a one device. For example, one device may be driven by one or more NF instances. In the following description, a specific NF, NF instance, or NF device may be a replaceable element unless restriction in which it must be in the form of an NF device or an NF instance is stated.

The AMF device 131 may be an network entity that performs wireless network access and mobility management on the terminal 120. The SMF device 132 may be an network entity that manages a connection of a packet data network for providing packet data to the terminal 120. The connection between the terminal 120 and SMF 132 may be a PDU session.

A user plane function (hereinafter referred to as UPF) device 133 may be a gateway for transmitting the packets transmitted and received by the terminal 120 or may be a network entity serving as a gateway. The UPF 133 may be connected to a data network (DN) 140 connected to the Internet and provide a path for data transmission/reception between the terminal 120 and the DN 140. Accordingly, the UPF 133 may route data to be transmitted to the Internet, among the packets transmitted by the terminal 120, to the Internet data network.

A network slice selection function (NSSF) device 134 may be a network entity performing a network selection operation, which is described in the disclosure, for example, an operation of selecting a network slice. The operation of the NSSF device 134 will be described in more detail with reference to the drawings to be described.

An authentication server function (AUSF) device 151 may be a network entity providing a subscriber authentication service.

A network exposure function (NEF) device 152 may be a network entity capable of accessing information for managing the terminal 120 in the 5G network, subscribing to an mobility management event for a corresponding terminal, subscribing to a session management event for a corresponding terminal, requesting information related to a session, configuring billing information of a corresponding terminal, requesting change of a PDU session policy for a corresponding terminal, and transmitting small amount of data on a corresponding terminal.

A network repository function (NRF) device 153 may be an NF or network entity storing a profile (NF profile) containing detailed information of each network function (NF) or status information of an NF or NF instance, and may transmit the profile or status information of an NF stored therein when another NF requests information of a specific NF.

A policy and charging function (hereinafter referred to as PCF) device 154 may be a network entity applying a service policy, a charging policy, and a policy for a PDU session of a mobile operator to the terminal 120.

A unified data management (hereinafter referred to as UDM) device 155 may be a network entity storing information about a subscriber or/and the terminal 120.

An application function (AF) device 156 may be a service application server or network entity providing services by interworking with a network, for example, a mobile communication network.

A service communication proxy (SCP) device 157 is are able to NF (network entity) providing functions such as NF discovery for communication between NFs, transmission of messages between NFs, and the like. The SCP 157 may operate in the integrated form with the NRF 153 according to selection of an operator, and in this case, the SCP device 157 may include functions of the NRF device 153, or the NRF device 153 may include functions of the SCP device 157.

The AMF device 131, the SMF device 132, the UPF device 133, the NSSF device 134, the AUSF device 151, the NEF device 152, the NRF device 153, the PCF device 154, the UDM device 155, the AF device 156, and the SCP device 157 described above may be in the form of software or firmware driven in at least one or more devices or/and systems. In addition, the above-described devices 131, 132, 133, 134, 151, 152, 153, 154, 155, 156, and 157 may be implemented in hardware if necessary. In the following description, the term "device" will be omitted for the convenience of description. For example, the AMF device 131 will be described as AMF 131, and the SMF device 132 will be described as SMF 132.

Meanwhile, the signs between the lines connected between the respective network entities, the terminal 120, and the RAN 110 in FIG. 1 may be interfaces of the respective entities. For example, this may indicate that an N1 interface is used between the terminal 120 and the AMF 131, that an N2 interface is used between the RAN 110 and the AMF 131, and that an N3 interface is used between the RAN 110 and the UPF 133. Similarly, an N4 interface may be used between the SMF 132 and the UPF 133, an N9 interface may be used between or inside the UPFs 133, and an N6 interface may be used between the UPF 133 and the DN 140.

A specific NF instance in the disclosure may indicate that a specific NF, in the form of a software code, is in the state of receiving physical or/and logical resources allocated by a physical computing system, for example, a specific computing system existing on a core network, in order to perform the functions of the NF in the computing system, and of being able to execute the same. Accordingly, the AMF instance, the SMF instance, and the NSSF instance may indicate that the state of receiving physical or/and logical resources allocated from a specific computing system existing on the respective core networks for the operations of the AMF, the SMF, and the NSSF and of being able to using the same. As a result, the physical AMF, SMF, and NSSF devices and the AMF instance, SMF instance, and NSSF instance, which receive and use the physical or/and logical resources allocated from a specific computing system existing in the core networks for the operations of the AMF, SMF, and NSSF, may perform the same operation. Accordingly, in the embodiment of the disclosure, a description of the NFs (AMF, SMF, UPF, NSSF, NRF, SCP, etc.) may be applied by being replaced by the NF instances, or a description of the NF instances may be applied by being replaced by the NFs.

Similarly to that described above, in the embodiment of the disclosure, a description of an NW slice may be applied by being replaced by an NW slice instance, or a description of an NW slice instance may be applied by being replaced by an NW slice. In addition, the NW slice may be described as a network slice, a core network slice, or, simply, a slice.

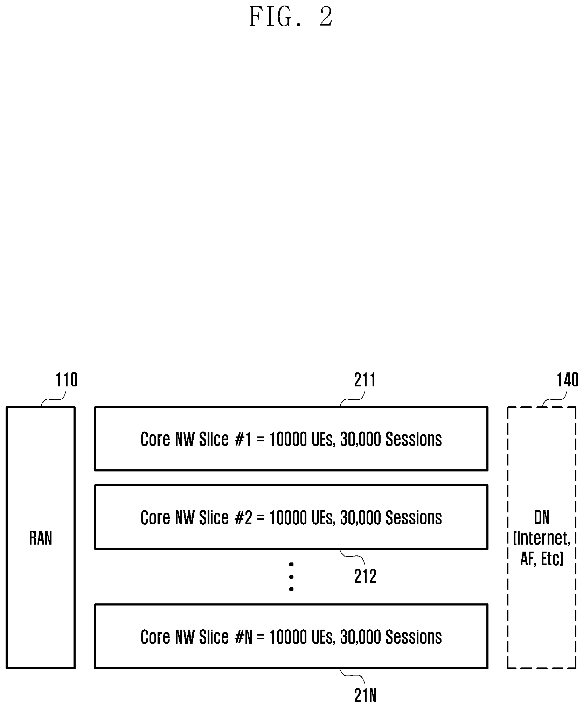

FIG. 2 is a diagram illustrating the configuration of a wireless communication system according to an embodiment of the disclosure.

Referring to FIG. 2, a mobile communication system (an operator network such as 5G, 4G, etc.) may include a wireless base station, for example, a radio access network (RAN) 110 and one or more core network slices. FIG. 2 illustrates N core network slices 211, 212, ..., 21N. The RAN 110 may perform transmission/reception of data between a terminal (e.g., the terminal 120 in FIG. 1) and a data network (DN) 140 through at least one core network slice. In addition, according to the operator network configuration, the core network may be configured in the form of a slice or may be configured without a network slice, and may be configured as both of them.

One core network slice may basically include NFs of two or more core networks. If one core network slice includes only one NF, it is the same as the one NF in its function, so a description will be made, excluding such a case, in the disclosure. However, actually, one core network slice may be implemented as only one NF. The following embodiment will be described based on the case in which one core network slice includes NFs of two or more core networks by way of example.

For example, NFs corresponding to one core network may include the AMF 131, the SMF 132, and the UPF 133. In addition, according to another embodiment, the NFs may include at least one or more of the AMF 131, the SMF 132, and the UPF 133. According to another embodiment, the NFs may further include at least one other NF in addition to the AMF 131, the SMF 132, and the UPF 133. According to another embodiment, the NFs may include at least one or more of the AMF 131, the SMF 132, and the UPF 133 and further include at least one other device in addition to the devices described above.

As described above, one core network slice may include at least one of the NFs constituting the core network and generally include two or more NFs. The configuration of the core network slice may be limited to the essential elements in the standard document of the corresponding technology or may be implemented differently depending on the needs of a network operator.

In addition, all NFs constituting the respective core network slices 211, 212, ..., 21N illustrated in FIG. 2 may be the same, and at least one of the NFs of the respective core network slices 211, 212, ..., 21N may be different. The following description will be made on the assumption that all NFs of the respective core network slices 211, 212, ..., 21N are the same for the convenience of description. In addition, throughout this specification, the core network slice may be referred to as a network slice or a slice.

In the embodiment of the disclosure, each of the network slices 211, 212, ..., 21N may provide a service suitable for its own characteristics, and the quotas capable of simultaneously being provided may be different between the network slices 211, 212, ..., 21N. The quotas of the network slices 211, 212, ..., 21N may be, for example, the maximum number of terminals (subscribers) and the number of sessions. Each of the network slices 211, 212, ..., 21N may control access to the network according to its own quota.

Referring to FIG. 2, illustrated is an example in which 10,000 terminals can access the first network slice 211 and in which 30,000 sessions are acceptable therein. The example shows that 50,000 terminals can access the second network slice 212 and that 100,000 sessions are acceptable therein. In addition, the example shows that 1,000 terminals can access the N^{th} network slice 21N and that 5,000 sessions are acceptable therein.

As illustrated in FIG. 2, the quotas of the respective network slices 211, 212, ..., 21N may be configured to be different from each other for each slice according to the configuration of a mobile communication operator. If one specific slice is leased or sold to a separate service provider, the quota may be configured to be different between the slices according to a service level agreement (SLA).

According to an embodiment of the disclosure, the quota (or capacity) of one network slice may be represented as at least one of the following parameters.
1. The maximum number of subscribers, terminals, or users simultaneously accessible to the network slice
2. The maximum number of sessions (PDU sessions) simultaneously supported in the network slice
3. The maximum number of IP flows simultaneously supported in the network slice
4. The maximum number of QoS flows simultaneously supported in the network slice
5. The maximum number of GBR flows simultaneously supported in the network slice

According to an embodiment of the disclosure, as illustrated in FIG. 2, the quota of one network slice may be configured as the number of simultaneously accessible terminals (parameter 1) and the maximum number of simultaneously supported sessions (parameter 2). In addition, the quota of one network slice may be configured using at least one or more of the parameters described above.

Meanwhile, the parameters related to the session and flow (e.g., the cases 2 to 5 among the examples of the parameters described above) may be expressed as predetermined values for each network slice (e.g., 10,000 sessions per network slice are supported), or may be expressed as a specific value per one connected terminal (e.g., Up to 4 sessions are simultaneously supported for each terminal connected to the network slice).

According to an embodiment of the disclosure, through the quota control for each network slice, the operator's mobile communication network may be protected from overload, the network resources may be effectively used, and accurate charging between the mobile communication operator and the network slice users may be performed.

Meanwhile, according to an embodiment of the disclosure, if access control using the quota is performed for each network slice, the limit value of the quota configured in the actual network slice may be reached. If the quota of the network slice is configured as the maximum number of simultaneously accessible sessions, a technique for processing the case in which an access request exceeding the quota is received is required. For example, in the case where 1000 sessions can be established for a specific network slice and where Service A having a higher priority and Service B having a lower priority coexist in the slice, if an access request is received when the maximum number of sessions is reached, it may be necessary to provide Service A to two subscribers, instead of providing both Service A and Service B to one subscriber. In an embodiment of the disclosure, the number of sessions per network slice may be more specifically controlled by being divided into the number of PDU sessions, the number of QoS flows, and the number of IP flows.

If the quota for each network slice is configured, in order to perform the network slice access control in consideration of quota, 1) a function of collecting information of NFs belonging to the network slice and identifying the status of the network slice and 2) a function of controlling the access (registration) of the terminal in consideration of the status and quota of the network slice may be provide. Both functions may be performed by one NF for network slice quota management or by two NFs through division of roles. In the case where two NFs share roles, the NF performing a first function will be referred to as a counting NF in the disclosure, and the NSSF, the PCF, and the UDM in 5GC may include the corresponding function. The NF performing a second function may be referred to as a enforcing NF (or acting NF) in the disclosure, and the second function may be performed by the AMF when the number of terminals is required to be controlled, and may be performed by the SMF or the AMF when the number of sessions is required to be controlled.

In an embodiment of the disclosure, in the case where the quota supported in a specific network slice is configured as the maximum number of simultaneously accessible sessions, if the number of sessions already reaches the maximum for the network slice that is the target of session establishment/addition requested by the terminal, the following process may be performed by the enforcing NF.
1) Rejection of session establishment/addition: The terminal 120 that requested the establishment or addition of a session is informed through a reject message that the request has been rejected, and in this case, a cause indicating that the rejection is based on the control due to the quota of the network slice (i.e., the maximum value configured as the quota is reached) is transmitted to the terminal 120. In addition, a timer value allowing re-requesting may be further transmitted to the terminal 120. If the access request is a session establishment/addition request for a specific network slice and if rejection occurs during the control process for the maximum number of sessions of the network slice, the timer is applied to the corresponding network slice(s), so that the terminal 120 is unable to re-transmit a session establishment or addition request for the corresponding network slice(s) until the timer expires. If the access request relates to a session (DNN) mapped to a specific network slice and if rejection occurs during the control process for the maximum number of sessions of the network slice, the timer is applied to the corresponding network slice(s) and the mapped DNN(s), so that the terminal 120 is unable to re-transmit a session establishment request for the corresponding network slice(s) and the mapped DNN(s) until the timer expires. If the timer expires, the terminal 120 may re-transmit a connection or session establishment request.
2) Acceptance of new request after release of session: If the network slice (or the DNN further mapped to the network slice) that is the target of session establishment/addition requested by the terminal 120 reaches the maximum number of sessions, at least one NF of one NF, an enforcing NF, or an acting NF for quota management compares priorities between the new request and a previously established session for the corresponding network slice, and, if there is a session having a lower priority, selects the session and terminal to be released. A release procedure is performed on the session selected by at least one NF of one NF, an enforcing NF, or an acting NF for quota management, and the new session establishment/addition request is processed after an available resource is secured. If there is no other session or terminal to be deleted, a reject response to the new request is transmitted.
3) Acceptance after changing quality of service: If the network slice (or the DNN further mapped to the network slice) that is the target of session establishment/addition requested by the terminal 120 reaches the maximum number of sessions, a service is provided with lower QoS than the default QoS configured by request or subscription information. According to an embodiment of the disclosure, lowering the QoS may include one or more of the following.
   A. Reducing the maximum allowed data rate
   B. Changing a guaranteed bit rate (GBR) flow to a non-GBR flow
   C. Adjusting 5QI (5G QoS indicator) (reducing 5QI to have a lower priority)
   D. Reducing ARP (allocation and retention priority) to have a lower value
   E. Limiting the maximum number of flows in the session

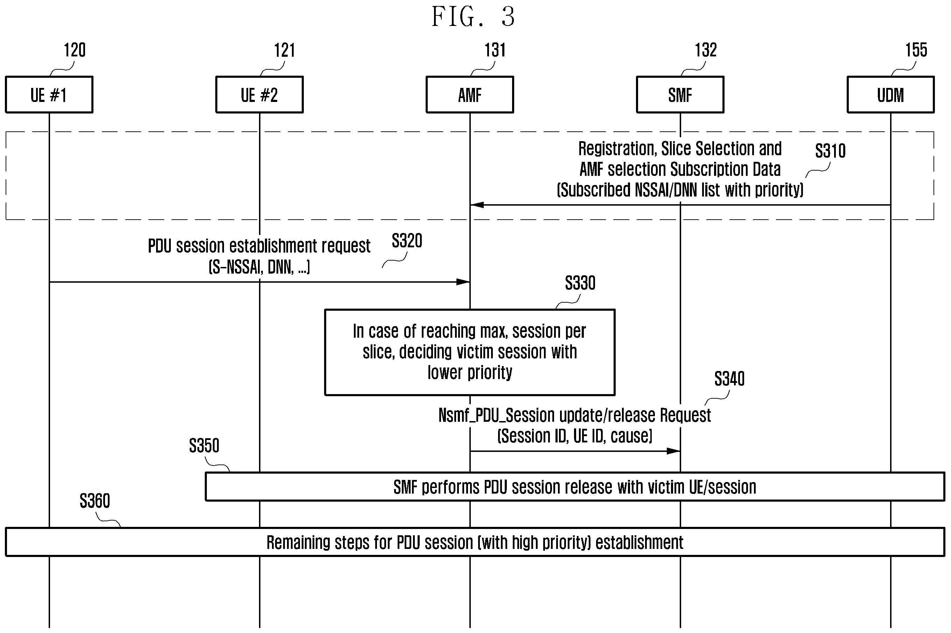

FIG. 3 is a flowchart illustrating a procedure for performing session control for each network slice according to an embodiment of the disclosure.

FIG. 3 illustrates two different terminals 120 and 121. A first terminal 120 and a second terminal 121 may perform the same function or different functions. As an example of terminals performing different functions, the first terminal 120 may be a device used by a user, and the second terminal 121 may be a device performing MTC.

In step S310, a registration process is performed between the first terminal 120 and a network. During this registration process, a process of selecting a network slice and selecting an AMF 131 for the first terminal 120 may be performed, and to this end, information about the network slice (the maximum number of available sessions and the like) may be received from the NSSF 134, the NRF 153, and the like. In addition, during the registration process, the AMF 131 may receive subscription information of a subscriber from the UDM 155. In this case, the subscription information for access and mobility management may include subscribed single-network slice selection assistance information (S-NSSAI) and information about a mapped DNN In addition, the subscription information may include relative priority information for each network slice or DNN, or/and QoS parameters capable of basically being provided to each DNN The priority for each DNN may be provided using ARP among the QoS parameters capable of basically being provided to each DNN Throughout the specification of the disclosure, an identifier of the network slice may be used in the same meaning as the S-NSSAI.

In step S320, the first terminal 120 transmits a PDU session establishment request for transmitting and receiving traffic for a specific network slice to the AMF 131. The request by the first terminal 120 may include an identifier (S-NSSAI) of a network slice and a mapped DNN

In step S330, the AMF 131 performs a process of selecting a network slice and an SMF 132 belonging to the network slice in order to establish a session for the network slice according to the request of the first terminal 120. At this time, the AMF 131 may exchange a message with the NSSF 134, the NRF 153, or the PCF 154, thereby receiving network slice information (e.g., the aforementioned maximum quota, etc.), information about an SMF 132 (or an SMF instance) belonging to the network slice, and status information of the current network slice (the number of currently connected terminals, the number of sessions, etc.) (not shown in FIG. 3). In addition, if the maximum quota configured for a specific network slice is reached (e.g., if the maximum number of sessions accessible to the network slice is reached) during the process, information on this may also be received. If a supported quota limit is reached for the network slice requested by the first terminal 120 or the DNN associated with the network slice, in order to secure the resource requested by the first terminal 120 according to the priority for each subscriber/service, the AMF 131 may release other sessions with lower priorities and secure resources to be allocated to the first terminal 120.

The operation of securing the resource according to the priority will be described in more detail as follows. In the selection process, the AMF 131 may retrieve previously established sessions having lower priorities than the newly requested session (or subscriber) for the requested network slice (or the network slice and the mapped DNN). If there are previously established sessions having lower priorities than the newly requested session (or subscriber) as a result of the retrieving, a process of selecting a session with the lowest priority from among the sessions and releasing the selected session may be performed. As described above, the priority for each subscriber or session may be received through the UDM 133 or received through the PCF 154, or a value configured in the AMF 133 may be used as the priority. In addition, in the case where these values are already received, the AMF 131 may store the same in an internal memory.

In step S340, the AMF 131 may search for an SMF 132 for the selected session and transmit an NSMF_PDUSession_ReleaseSMContext message, including a PDU session ID, to release a PDU session (when a new request is intended to establish a PDU session) or transmit an NSMF PDUSession UpdateSMContext message (or signal) to update a PDU session together with a PDU session ID to the SMF 132. In this case, each of the request messages transmitted by the AMF 131 to the SMF 132 may include a reason for release or update of the PDU session. For example, an indication indicating that it is due to quota control for the network slice or that it is due to preemption by a session having a higher priority may be included.

In step S350, the SMF 132 performs release/update processing on the PDU session according to the PDU session release/update request received in step S340. FIG. 3 shows an example in which at least one PDU session of the second terminal 121 is released. The SMF 132 may perform a procedure of releasing at least one PDU session of the second terminal 121 in step S350.

In step S360, the AMF 131 may recognize that a session available for the network slice is produced according to the result in step S350. For example, in step S350, the SMF 132 may inform that the PDU session of the first terminal 120 is allowable. Accordingly, the AMF 131 may perform a procedure for establishing a new session, based on the information received from the first terminal 120 in step S320.

Meanwhile, although the description of the above embodiment has been made on the assumption that the target of control is a new PDU session, the target of control may be a QoS flow or an IP flow belonging to a PDU session. That is, if the first terminal 120 transmits a request for adding a new QoS flow or IP flow in step S320 or if a condition for adding a new QoS flow or IP flow in 5GC is met, the AMF 131 may identify the quota of the network slice that is the target of the request, and, if the maximum number of QoS flows or the number of IP flows is already reached, select and release a QoS flow (or IP flow) having a lower priority, thereby establishing the newly requested QoS flow (or IP flow).

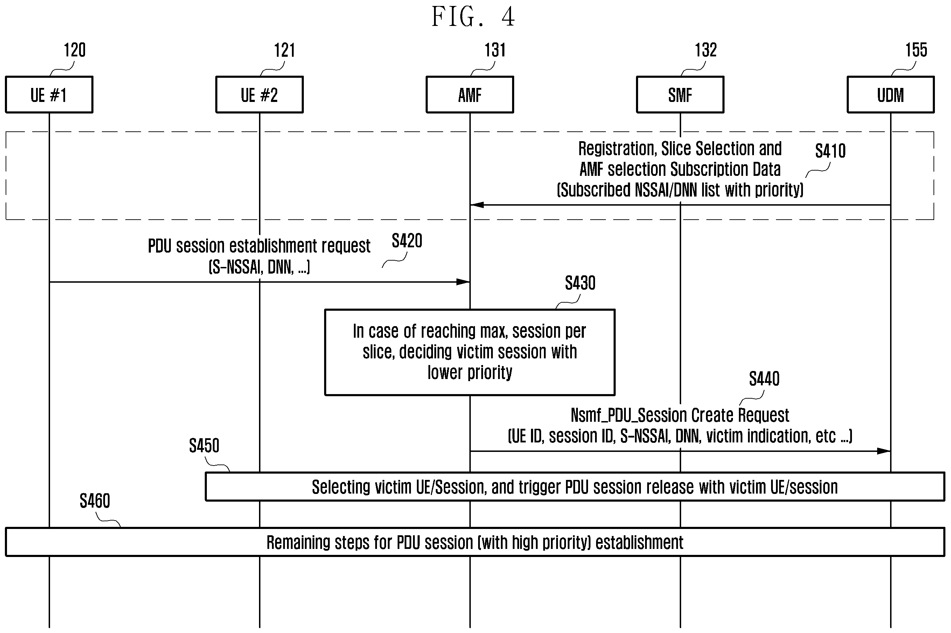

FIG. 4 is a flowchart illustrating a procedure for performing session control for each network slice according to an embodiment of the disclosure.

Since the elements in FIG. 4 are the same as the elements in FIG. 3, a redundant description thereof will be omitted.

In step S410, a registration process is performed between the first terminal 120 and a network. During this registration process, a process of selecting a network slice and selecting an AMF 131 for the first terminal 120 may be performed, and to this end, information about the network slice (the maximum number of available sessions and the like) may be received from the NSSF 134, the NRF 153, and the like. In addition, during the registration process, the AMF 131 may receive subscription information of a subscriber from the UDM 155. In this case, the subscription information for access and mobility management may include subscribed S-NSSAI and information about a mapped DNN In addition, the subscription information may include priority information for each network slice or DNN, or/and QoS parameters capable of basically being provided to each DNN The priority for each DNN may be provided using ARP among the QoS parameters capable of basically being provided to each DNN

In step S420, the first terminal 120 transmits a PDU session establishment request for transmitting and receiving traffic for a specific network slice. The request by the first terminal 120 may include an identifier (S-NSSAI) of a network slice and a mapped DNN

In step S430, the AMF 131 performs a process of selecting a network slice and an SMF 132 belonging to the network slice in order to establish a session for the network slice according to the request of the first terminal 120. At this time, the AMF 131 may exchange a message with the NSSF 134, the NRF 153, or the PCF 154, thereby receiving network slice information (e.g., the aforementioned maximum quota, etc.), information about an SMF 132 (or an SMF instance) belonging to the network slice, and status information of the current network slice (the number of currently connected terminals, the number of sessions, etc.) (not shown in FIG. 4). In addition, if the maximum quota configured for a specific network slice is reached (e.g., if the maximum number of sessions accessible to the network slice is reached) during the process, information on this may also be received from a corresponding NF. If a supported quota limit is reached for the network slice requested by the first terminal 120 or the DNN associated with the network slice, in order to secure the resource requested by the first terminal 120 according to the priority for each subscriber/service, the AMF 131 may release other sessions with lower priorities and secure resources to be allocated to the first terminal 120.

The operation of securing the resource according to the priority will be described in more detail as follows. In the selection process, the AMF 131 may retrieve previously established sessions having lower priorities than the newly requested session (or subscriber) for the requested network slice (or the network slice and the mapped DNN). If there are previously established sessions having lower priorities than the newly requested session (or subscriber) as a result of the retrieving, a process of selecting a session with the lowest priority from among the sessions and releasing the selected session may be performed. As described above, the priority for each subscriber or session may be received through the UDM 155 or received through the PCF 154, or a value configured in the AMF 131 may be used as the priority. In addition, in the case where these values are already received, the AMF 131 may store the same in an internal memory.

In step S440, the AMF 131 may include an NSMF_PDUSession_CreateSMContext in a PDU session create request message, which is a request message for establishing a PDU session according to the request received in step S420, and transmit the same to a selected SMF 132. In addition, the request message may include an ID of a PDU session to be newly established, a subscriber ID (e.g., a UE ID), S-NSSAI, DNN, and the like. In addition, the request message may include an ID of a PDU session to be released due to a quota limit before establishing a PDU session of the first terminal 120, information about a subscriber ID, and a victim indication indicating that the release is due to a quota limit (the maximum limit of the number of sessions).

In step S450, the SMF 132 searches for a PDU session to be released, which is included in the PDU session create request received in step S440 and performs release/update processing on the PDU session. Like FIG. 3, FIG. 4 shows an example in which at least one PDU session of the second terminal 121 is released. The SMF 132 may perform a procedure of releasing at least one PDU session of the second terminal 121 in step S450.

In step S460, if it is possible to establish a new session for the network slice (or the network slice and the mapped DNN), the SMF 132 performs a procedure of establishing a new PDU session received in step S440. For example, the SMF 132 may identify that a PDU session of the first terminal 120 is allowable based on the result in step S450. Based on this, in step S460, the SMF 132 may perform a new-session establishment procedure, based on the information received from the first terminal 120 in the previous step S420.

Meanwhile, although the description of the above embodiment has been made on the assumption that the target of control is a new PDU session, the target of control may be a QoS flow or an IP flow belonging to a PDU session. That is, if the first terminal 120 transmits a request for adding a new QoS flow or IP flow in step S420 or if a condition for adding a new QoS flow or IP flow in 5GC is met, the AMF 131 may identify the quota of the network slice that is the target of the request, and, if the maximum number of QoS flows or the number of IP flows is already reached, request the SMF 132 to select and release a QoS flow (or IP flow) having a lower priority and establish the newly requested QoS flow (or IP flow). Accordingly, the SMF 132 may perform the requested operation.

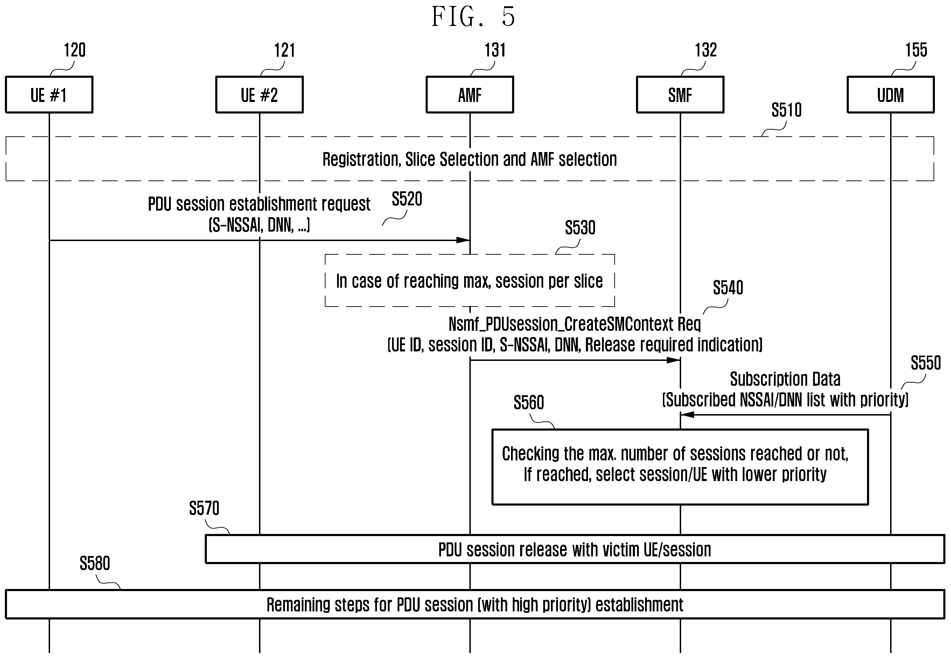

FIG. 5 is a flowchart illustrating a procedure for performing session control for each network slice according to an embodiment of the disclosure.

Since the elements in FIG. 5 are the same as the elements in FIGS. 3 and 4, a redundant description thereof will be omitted.

In step S510, a registration process is performed between the first terminal 120 and a network. During this registration process, a process of selecting a network slice and selecting an AMF 131 for the first terminal 120 may be performed, and to this end, information about the network slice (the maximum number of available sessions and the like) may be received from the NSSF 134, the NRF 153, and the like. In addition, during the registration process, the AMF 131 may receive subscription information of a subscriber from the UDM 155. In this case, the subscription information for access and mobility management may include subscribed S-NSSAI and information about a mapped DNN In addition, the subscription information may include priority information for each network slice or DNN, or/and QoS parameters capable of basically being provided to each DNN The priority for each DNN may be provided using ARP among the QoS parameters capable of basically being provided to each DNN

In step S520, the first terminal 120 transmits a PDU session establishment request for transmitting and receiving traffic for a specific network slice to the AMF 131. The request by the first terminal 120 may include an identifier (S-NSSAI) of a network slice and a mapped DNN

In step S530, the AMF 131 performs a process of selecting a network slice and an SMF 132 belonging to the network slice in order to establish a session for the network slice according to the request of the first terminal 120. At this time, the AMF 131 may exchange a message with the NSSF 134, the NRF 153, or the PCF 154, thereby receiving network slice information (e.g., the aforementioned maximum quota, etc.), information about an SMF 132 (or an instance) belonging to the network slice, and status information of the current slice (the number of currently connected terminals, the number of sessions, etc.) (not shown in FIG. 5). In addition, if the maximum quota configured for a specific slice is reached (e.g., if the maximum number of sessions accessible to the slice is reached) during the process, the AMF 131 may receive information on this from a corresponding NF.

In step S540, the AMF 131 may transmit a PDU session establishment request (NSMF_PDUSession_CreateSMContext) according to the request received from the first terminal 120 in step S520 to the selected SMF 132, and this message may include an ID of a PDU session to be newly established, a subscriber ID, S-NSSAI, DNN, and the like and may include an indication indicating that release should be performed on other sessions if the maximum number of accessible sessions (quotas) for the requested S-NASSI (or the DNN mapped to the S-NSSAI) is reached.

In step S550, the SMF 132 may process the PDU session establishment request received in step S540 and receive subscription information on the subscriber's session from the UDM 155 during this process, and the subscription information may include information about a subscribed allowable network slice and a mapped DNN, priority information for each DNN, and QoS parameters capable of basically being provided to each DNN The priority for each DNN may be provided using ARP among the QoS parameters capable of basically being provided to each DNN

In step S560, if the supported quota limit is reached for the network slice requested by the first terminal 120 or the DNN associated with the network slice, or if the AMF 131 receives information stating that release should be performed for other sessions through the message received in step S540, the SMF 132 may select a session to be released, instead of the session requested according to the priority for each subscriber/service, thereby securing resources. At this time, in the selection process, the SMF 132 searches for a previously established sessions having lower priorities than the newly requested session (or subscriber) for the same network slice as the requested network slice (or the network slice and the mapped DNN), and if there are previously established sessions having lower priorities than the newly requested session (or subscriber), the SMF 132 selects a session having the lowest priority from among them and performs a process of releasing the selected session. As described above, the priority for each subscriber or session may be received through the UDM 155 or received through the PCF 154, or a value configured in the SMF 132 may be used as the priority.

In step S570, the SMF 132 searches for a PDU session to be released and performs release/update processing on the PDU session. Like FIGS. 3 and 4, FIG. 5 also shows an example in which at least one PDU session of the second terminal 121 is released. The SMF 132 may perform a procedure of releasing at least one PDU session of the second terminal 121 in step S570.

In step S580, if it is possible to establish a new session for the network slice (or the network slice and the mapped DNN), the SMF 132 performs a procedure of establishing a new PDU session received in step S540.

Meanwhile, although the description of the above embodiment has been made on the assumption that the target of control is a new PDU session, the target of control may be a QoS flow or an IP flow belonging to a PDU session. That is, if the first terminal 120 transmits a request for adding a new QoS flow or IP flow in step S520 or if a condition for adding a new QoS flow or IP flow in 5GC is met, the SMF 132 may identify the quota of the network slice that is the target of the request, and, if the maximum number of QoS flows or the number of IP flows is already reached, select and release a QoS flow (or IP flow) having a lower priority, thereby establishing the newly requested QoS flow (or IP flow).

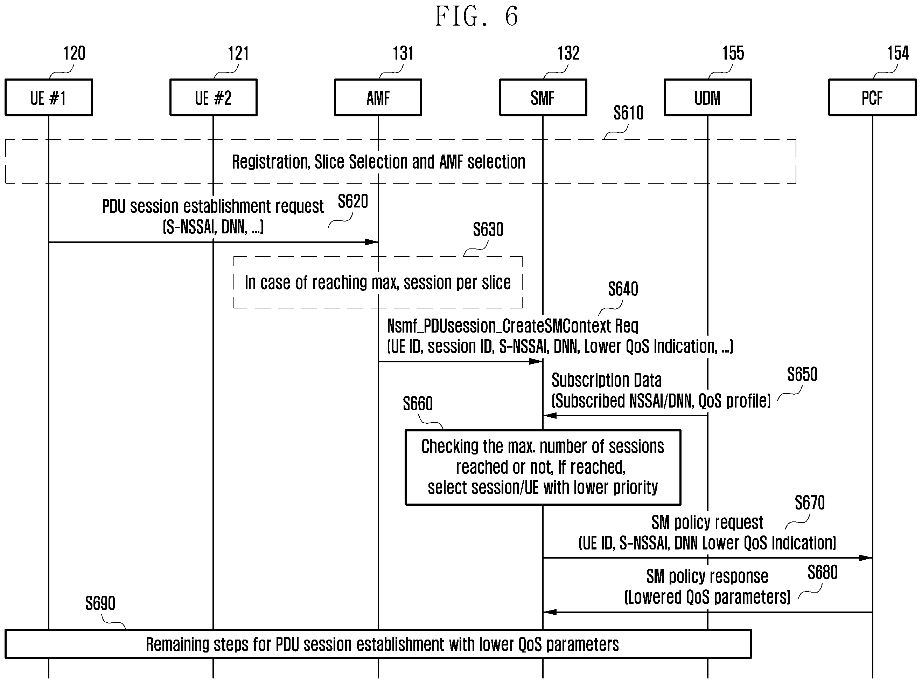

FIG. 6 is a flowchart illustrating a procedure for performing session control for each network slice according to an embodiment of the disclosure.

FIG. 6 further illustrates a UDM 155 and a PCF 154 in addition to the elements in FIGS. 3 to 5 described above. Since the network elements have been described in the above embodiments, a redundant description thereof will be omitted.

In step S610, a registration process is performed between the first terminal 120 and a network. During this registration process, a process of selecting a network slice and selecting an AMF 131 for the first terminal 120 may be performed, and to this end, information about the network slice (the maximum number of available sessions and the like) may be received from the NSSF 134, the NRF 153, and the like. In addition, during the registration process, the AMF 131 may receive subscription information of a subscriber from the UDM 155, and in this case, the subscription information for access and mobility management may include subscribed S-NSSAI and information about a mapped DNN In addition, the subscription information may include QoS parameters capable of basically being provided to each network slice or DNN and may include an indication indicating whether or not it is allowed to provide a lower QoS if the maximum quota for the network slice is reached. According to an embodiment of the disclosure, the quota may include the maximum number of allowable PDU sessions per network slice, the number of QoS flows having a specific 5QI, the number of GBR flows, and the like.

In step S620, the first terminal 120 transmits a PDU session establishment request for transmitting and receiving traffic for a specific network slice. The request by the first terminal 120 may include an identifier (S-NSSAI) of a network slice and a mapped DNN

In step S630, the AMF 131 performs a process of selecting a network slice and an SMF 132 belonging to the network slice in order to establish a session for the network slice according to the request of the first terminal 120. At this time, the AMF 131 may exchange a message with the NSSF 134, the NRF 153, or the PCF 154, thereby receiving network slice information (e.g., the aforementioned maximum quota, etc.), information about an SMF 132 (or an instance) belonging to the network slice, and status information of the current slice (the number of currently connected terminals, the number of sessions, etc.). In addition, if the maximum quota configured for a specific network slice is reached (e.g., if the maximum number of sessions simultaneously accessible to the network slice is reached) during the process, information on this may be received.

In step S640, the AMF 131 may transmit a request for establishing a PDU session (NSMF_PDUSession_CreateSMContext) according to the request received from the first terminal 120 in step S620 to the selected SMF 132, and this message may include an ID of a PDU session to be newly established, a subscriber ID, S-NSSAI, DNN, and the like and may include an indication indicating that the service may be provided by lowering the QoS if the maximum supported quota is reached for the requested S-NASSI (or the DNN mapped to the S-NSSAI).

In step S650, the SMF 132 may process the PDU session establishment request received in step S640 and receive subscription information on the subscriber's session from the UDM 155 during this process, and the subscription information may include information about a subscribed allowable network slice and a mapped DNN, priority information for each DNN, and QoS parameters capable of basically being provided to each DNN In addition, if a quota limit for the requested network slice is reached, the subscription information may include an indication indicating that the service may be provided by lowering the QoS. If the supported quota limit is reached for the network slice requested by the terminal 120 or the DNN associated with the network slice, and if it is possible to provide a service by lowering the QoS according to the subscription information, the SMF 132 performs an operation of adjusting the QoS (S660). The parameters to be referred to when changing the QoS may be received in the form of subscription information from the UDM 155, obtained using a configuration value stored in the SMF 132, or received through the PCF 154 (steps S670 and S680).

In step S670, the SMF 132 establishes a session management (SM) policy association with the PCF 154 to receive a policy to be used for a subscriber. In this case, a request message, an NPCF_SMPolicyControl_Create request, transmitted by the SMF 132 may include information such as a subscriber ID, a PDU session ID, S-NSSAI, DNN, and the like, and further include an indication requesting QoS information to be applied when the quota limit for S-NSSAI is reached.

In step S680, the PCF 157 produces a policy according to the request of the SMF 132, and for this purpose, may exchange information with a unified data repository (UDR) if necessary (not shown). In step S680, the PCF 157 may include the produced policy in a response, NPCF-SMPolicyControl_Create response, to be transmitted to the SMF 132, and in particular, QoS information to be applied when the quota limit is reached as requested in step S660 may be included in the response. In this case, the policy transmitted by the PCF 154 may include both the QoS information to be applied when the quota limit is not reached and the QoS information to be applied when the quota limit is reached, or may include only QoS information to be applied when the quota limit is reached if it is clear that the quota limit is reached. In this case, the lower QoS information to be applied when the quota limit is reached may be expressed as lowering the maximum allowable data rate, compared to the case where the quota limit is not reached, changing a GBR (guaranteed bit rate) flow into a non-GBR flow (i.e., the GBR flow is not allowed), adjusting 5QI (lowering 5QI to a value corresponding to a lower priority), lowering ARP (allocation and retention priority) to a lower value, or limiting the maximum number of flows belonging to a session.

In step S690, the SMF 132 performs a session establishment procedure according to the configured QoS information.

Meanwhile, although the description of the above embodiment has been made on the assumption that the target of control is a new PDU session, the target of control may be a QoS flow or an IP flow belonging to a PDU session. That is, if the first terminal 120 transmits a request for adding a new QoS flow or IP flow in step S620 or if a condition for adding a new QoS flow or IP flow in 5GC is met, the SMF 132 may identify the quota of the network slice that is the target of the request, and, if the maximum QoS is reached, lower the QoS, thereby establishing the newly requested QoS flow (or IP flow).

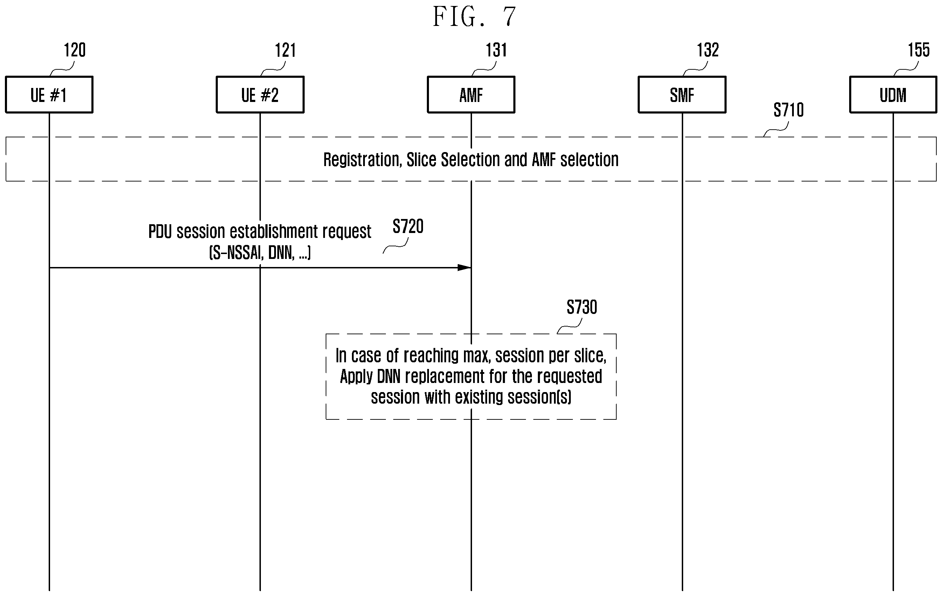

FIG. 7 is a flowchart illustrating a procedure for performing session control for each network slice according to an embodiment of the disclosure.

In step S710, a registration process is performed between the first terminal 120 and a network. During this registration process, a process of selecting a network slice and selecting an AMF 131 for the first terminal 120 may be performed, and to this end, information about the network slice (the maximum number of available sessions and the like) may be received from the NSSF 134, the NRF 153, and the like. In addition, during the registration process, the AMF 131 may receive subscription information of a subscriber from the UDM 155, and in this case, the subscription information for access and mobility management may include subscribed S-NSSAI and information about a mapped DNN In addition, the subscription information may include QoS parameters capable of basically being provided to each network slice or DNN and may include an indication indicating whether or not DNN replacement is allowed if a quota limit is applied to a specific network slice and DNN In addition, the DNN to be replaced when DNN replacement is applicable may be included.

In step S720, the first terminal 120 transmits a PDU session establishment request for transmitting and receiving traffic for a specific network slice. The request by the first terminal 120 may include an identifier (S-NSSAI) of a network slice and a mapped DNN

In step S730, the AMF 131 performs a process of selecting a network slice and an SMF 132 belonging to the network slice in order to establish a session for the network slice according to the request of the first terminal 120. At this time, the AMF 131 may exchange a message with the NSSF 134, the NRF 153, or the PCF 154, thereby receiving network slice information (e.g., the aforementioned maximum quota, etc.), information about an SMF 132 (or an instance) belonging to the network slice, and status information of the current network slice (the number of currently connected terminals, the number of sessions, etc.). In addition, if the maximum quota configured for a specific slice is reached (e.g., if the maximum number of sessions accessible to the network slice is reached) during the process, information on this may be received. The AMF 131 may establish an association with the PCF 154 to receive a policy for the first terminal 120. In this case, the policy for a subscriber received by the AMF 131 may include an indication indicating whether or not DNN replacement is allowed if a quota limit is applied to the network slice or network slice-DNN mapping. In addition, the policy may include a DNN to be replaced when DNN replacement is applicable. If the maximum number of sessions available for the network slice (or the network slice and the DNN) requested by the first terminal 120 is reached, the AMF 131 may perform a procedure for changing the requested DNN to another DNN, and the DNN information to be used therefor may be determined based on the subscription information received from the UDM 155 and the policy received from the PCF 154. If a PDU session has not yet established using the replaced DNN, a process of establishing a new session with the corresponding DNN is performed. At this time, according to the DNN replacement operation, information of the requested DNN, instead of the replaced DNN, is transmitted to the first terminal 120.

If there is a previously established session belonging to the same network slice for the first terminal 120 with the replaced DNN, the two sessions are established/managed in a merged form. That is, if the first terminal 120 requests to establish a PDU session with DNN #B in the state in which a PDU session is already established with DNN #A for the first terminal 120 and if the maximum number of supported PDU sessions is reached according to the quota limit for network slice (or the DNN mapped to the network slice), the AMF 131 may identify whether or not DNN replacement is allowed and perform an operation of replacing DNN #B with DNN #A. If QoS information (date rate, 5QI, ARP, packet filter, etc.) for the PDU session needs to be changed as the DNN replacement for the network slice is performed, the enforcing NF, for example, the SMF, may further perform an operation for this.

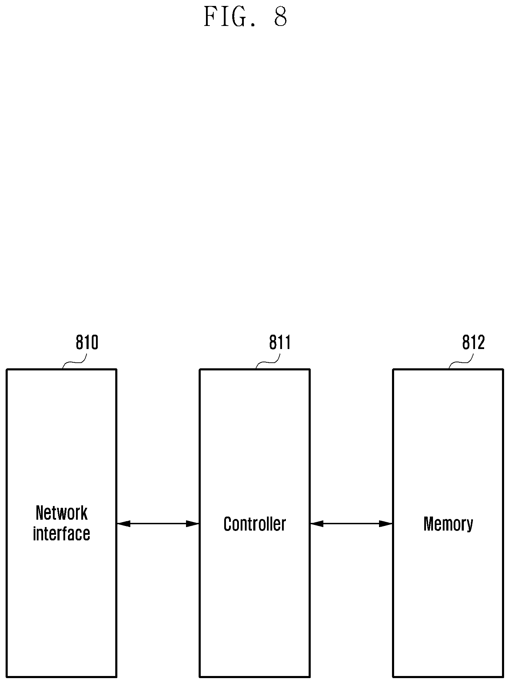

FIG. 8 is a block diagram illustrating the configuration of an NF according to an embodiment of the disclosure.

The NF may include the AMF 131, the SMF 132, and the UPF 133 as described above. In addition, the NF may include the NSSF 134, the NFR 153, and the SCP 157. As another example, the NF may be implemented as a separate network entity.

Referring to FIG. 8, a network interface 810 may communicate with other network entities of a core network. For example, if the NF is the AMF 131, the NF may communicate with the SMF 132, the UPF 133, the NSSF 134, the NFR 153, or/and the SCP 157. As another example, if the NF is the SMF 132, the NF may communicate with the AMF 131, the UPF 133, the NSSF 134, the NFR 153, or/and the SCP 157. As another example, if the NF is the NSSF 134, the NF may communicate with the AMF 131, the UPF 133, the SMF 132, the NFR 153, or/and the SCP 157. Similarly, if the NF is one specific network entity, it may communicate with other entities in the core network.

A controller 811 may be implemented with at least one processor or/and a program for performing the operation of the NF. For example, if the NF is the AMF 131, the controller 811 may perform the operation of the AMF 131 described above. As another example, if the NF is the NSSF 134, the controller may perform the above-described operation of the NSSF 134. In the case of other network entities, the controller may also perform control necessary for the above-described operations in the same manner.

A memory 812 may store programs and a variety of control information required by the controller 811, and may further store the information described in the disclosure. For example, if the NF is the AMF 131, the memory 812 may store information received from the above-described AMF 131 or received from an external entity. As another example, if the NF is the NSSF 134, the memory may store control information necessary for the above-described NSSF 134 or/and received information. In the case of other network entities, the memory may store information necessary for the operation described above in the same manner.

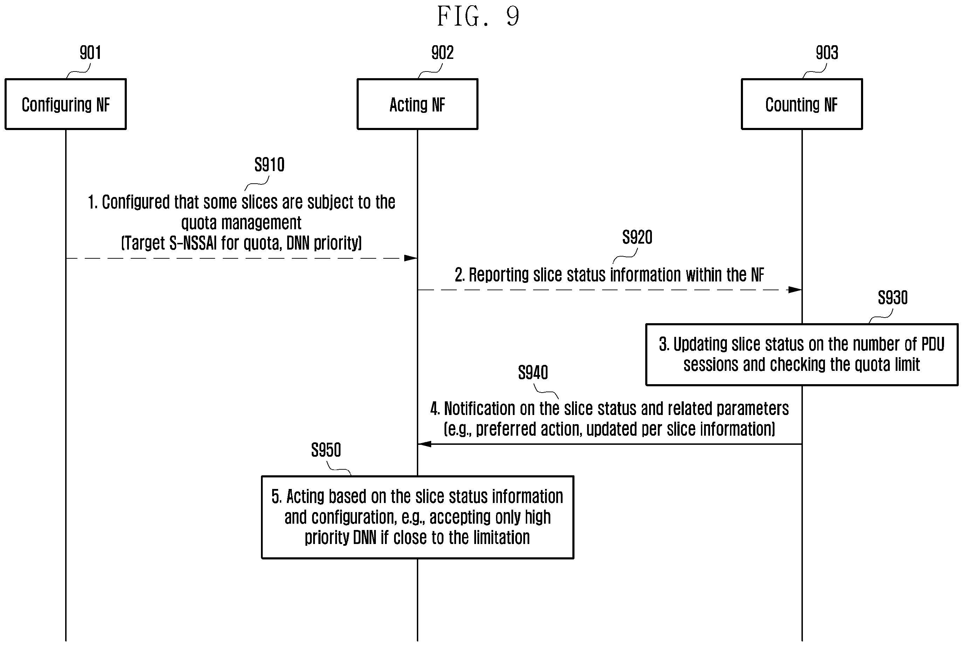

In addition, the network interface 810, the controller 811, and the memory 812 illustrated in FIG. 8 may perform the operations of the respective NFs illustrated in FIGS. 9 to 20 described below.

FIG. 9 is a flowchart illustrating an operation between NFs according to an embodiment of the disclosure.

The acting NF 902 illustrated in FIG. 9 according to the disclosure may be one of the NFs that actually process requests from the terminal. For example, the acting NF 902 may be the AMF 131 described in FIG. 1 above in the case of mobility management such as registration, and may be the SMF 132 in the case of session management such as PDU session establishment.

In addition, the counting NF 903 illustrated in FIG. 9 be any type of NF that collects network slice status information (the number of terminals for each of currently connected network slices, the number of sessions for each of current network slices, a data rate for each of current network slices, etc.) or provides a network slice quota management function. For example, it may be a separate NF (e.g., SQMF: slice quota management function) that provides the above function, may be any one of the NSSF 134, the NRF 153, and the PCF 154 described in FIG. 1, or may be implemented such that an NF such as a NWDAF or the like includes the corresponding function.

In the disclosure, a configuring NF 901 is an NF having a function of transmitting configuration information related to a specific network slice to another NF, and may be a kind of device (or instance, etc.) connected to another NF and performing an OMA function. The configuring NF 902 may be integrated with the counting NF 930 into one structure.

In step S910, the configuring NF 091 may configure information for providing a network slice management function in consideration of quotas for a specific network slice to the acting NF 902. The configured information may include an operation based on the quota when the terminal requests to use the S-NSSAI for each piece of S-NSSAI supported by the acting NF 902, that is, information for collecting current status information for each piece of target S-NSSAI and reporting the same to the counting NF 903, information for searching for the counting NF 903, or conditions or periods for reporting. In addition, the above information may include information for accepting or rejecting only a request by a user having a specific priority or of a specific service type (DNN, 5QI, etc.) if the quota reaches an upper limit or approaches the upper limit. Such information may include parameters enabling to determine that the quota reaches or approaches the upper limit, for example, a threshold value of the ratio (percentage, etc.) of the current slice usage (the number of registered terminals, the number of established sessions, the amount of data, etc.) to the maximum upper limit or, simply, a threshold value for the current slice usage, and the priorities between subscribers or the type of target subscriber to be preferentially allowed or denied, the priorities between DNNs or the target DNNs to be preferentially allowed or denied, the priorities between 5QI or target 5QIs to be preferentially allowed or denied, or the priorities between ARPs or target ARPs to be preferentially allowed or denied. Step S910 may be conducted by exchanging messages with the acting NF 092 if the configuring NF 901 exists separately, or may be configured as a local configuration in the acting NF 902.

In step S920, the acting NF 902 transmits a report message for transferring slice status information to the counting NF 903. The network slice status information may include the number of currently connected terminals, the number of sessions, and the amount of data transmission for each piece of S-NSSAI.

In step S930, the counting NF 902 may update the network slice status information using the information received in step S920. In addition, the counting NF 902 may determine whether or not the quota of the current network slice reaches the upper limit using the corresponding information.

In step S940, the counting NF 903 may transmit the network slice status information updated by itself and additional parameters for control to the acting NF 902. If parameters need to be provided to dynamically perform the action for network slice control, the counting NF 902 may provide the information transmitted by the configuring NF 901 in step S910, for example, the information for accepting or rejecting only a request by a user having a specific priority or of a specific service type (DNN, 5QI, etc.) if the quota reaches the upper limit or approaches the upper limit. This information may include parameters enabling to determine that the quota reaches or approaches the upper limit, for example, a threshold value of the ratio (percentage, etc.) of the current slice usage (the number of registered terminals, the number of established sessions, the amount of data, etc.) to the maximum upper limit or, simply, a threshold value for the current slice usage, and the priorities between subscribers or the type of target subscriber to be preferentially allowed or denied, the priorities between DNNs or the target DNNs to be preferentially allowed or denied, the priorities between 5QI or target 5QIs to be preferentially allowed or denied, or the priorities between ARPs or target ARPs to be preferentially allowed or denied.

In step S950, the acting NF 902 performs an operation, based on the information received in step S940. If the quota for network slice approaches the upper limit, it may preferentially process or reject the request for registration or session establishment by a terminal that satisfies specific conditions by the method configured by step S910, step S940, or a separate method. If a threshold value for performing such an operation is configured, the acting NF 902 may determine whether or not the condition is satisfied in consideration of the status of the current network slice. For example, if the PDU session established for a specific S-NSSAI is configured as a threshold, the acting NF 902 may compare the number of currently established sessions with the threshold, and, if the condition is satisfied, accept a session establishment request for a specific DNN or reject a session establishment request for a specific DNN Alternatively, if there is already a session established with another DNN for the S-NSSAI requested by the terminal, the acting NF 902 may reject the S-NSSAI requested by the terminal, and only if there is no session established for the S-NSSAI, the acting NF 902 may accept the same. Alternatively, if the threshold condition is satisfied, the acting NF 902 may refer to default QoS parameters of the requested session and accept/reject the request if there is a specific 5QI or accept/reject the request if there is a specific ARP

Meanwhile, in various embodiments of the disclosure, a date rate may be controlled when providing services to a user device. The date rate may be applied to the downlink or may be applied to the uplink. If a separate date rate value is applied to the uplink/downlink, signaling may also be transmitted separately. The date rate (NW slice aggregated maximum bit rate for downlink) for the network slice may be configured in the case of the downlink, and the date rate (NW slice aggregated maximum bit rate for uplink) for the network slice may be configured in the case of the uplink.

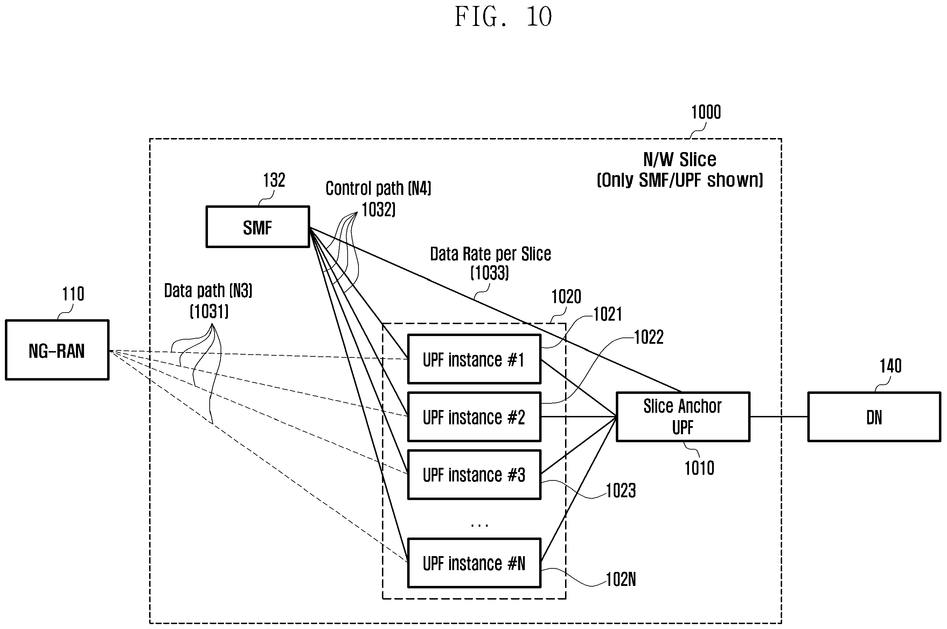

FIG. 10 illustrates the configuration of a wireless communication system according to various embodiments of the disclosure.

Referring to FIG. 10, a network slice 200 located between a base station 110 and a DN 140 is illustrated. The NW (network) slice 200 illustrated in FIG. 2 shows only the SMF 132 and UPFs 1010 and 1020. Although the network slice 1000 does not show other NFs in the example in FIG. 2, the network slice may further include other NFs (e.g., the AMF 131, etc.). In addition, as illustrated in FIG. 2, one or more SMFs may be included. The configuration of FIG. 10 will be described in more detail as follows.

According to various embodiments of the disclosure, the network slice 1000 may be configured to have a slice anchor UPF 1010 and may include UPF instances 1020 as illustrated in FIG. 10. First, the slice anchor UPF 1010 is an anchor UPF of a network slice, and may be referred to as a network slice anchor UPF, a slice anchor UPF, an anchor UPF, or a network slice anchor UPF, and all may be understood to have the same meaning. The slice anchor UPF 1010 may control the UPF instances 1020 driven for each network slice. As described above, the network slice 1000 may be configured to have UPFs in a hierarchical structure of two or more levels.

In addition, according to various embodiments of the disclosure, the N UPF instances 1021, 1022, 1023, ..., 102N may respectively establish data paths for transmitting/receiving data with the base station 110 through an N3 interface. In addition, the N UPF instances 1021, 1022, 1023, ..., 102N may respectively establish control paths 1032 with the SMF 132 through the N4 interface. The N UPF instances 1021, 1022, 1023, ..., 102N may also form control paths with the slice anchor UPF 1010 through the N4 interface. In addition, the slice anchor UPF 1010 may also establish control paths with the SMF 132 through the N4 interface that is a control path 1032. The SMF 132 may provide information for controlling a data rate per network slice using the N4 interface.

In addition, the slice anchor UPF 1010 may establish a path with the DN 140 through an N6 interface.

Hereinafter, an operation of controlling the data rate per network slice will be described based on the configuration described above. According to various embodiments of the disclosure, the UPF is configured to have a hierarchical structure of two or more levels as described above. Accordingly, the slice anchor UPF 1010 may control the UPF slices 1020 that are lower layers. For example, it may be assumed that UPF instance #1 (1021) corresponds to a first network slice, that UPF instance #2 (1022) corresponds to a second network slice, that UPF instance #3 (1023) corresponds to a third network slice, and that UPF instance #N (102N) corresponds to the N^{th} network slice. According to various embodiments of the disclosure, it may be assumed that a user equipment is able to transmit and receive data through one or more network slices.

In addition, if the SMF 132 has a hierarchical structure of two or more levels, the SMF 132 may provide the slice anchor UPF 1010 with data rates for the respective UPF instances 1021, 1022, 1023, ..., 102N or a parameter (W slice aggregated maximum bit rate) for the maximum date rate of the anchor UPF 1010 through the N4 interface. If the SMF 132 provides date rates for the respective UPF instances 1021, 1022, 1023, ..., 102N to the slice anchor UPF 1010, the slice anchor UPF 1010 may manage the data rates for the respective UPF instances 1021, 1022, 1023, ..., 102N. On the other hand, if the SMF 132 provides date rates to the respective UPF instances 1021, 1022, 1023, ..., 102N, the respective UPF instances 1021, 1022, 1023, ..., 102N may provide the anchor UPF 1010 with information (parameters) on the maximum date rates of the respective UPF instances.

In this case, for example, in the case of a downlink, user traffic generated in the DN 140 may be first received by the slice anchor UPF 1010. The slice anchor UPF 1010 receiving the user data from the DN 140 may determine the network slice through which the user data is to be transmitted. For example, the slice anchor UPF 1010 may determine whether to transmit user data through only one network slice or whether to transmit data through two or more network slices. As another example, the slice anchor UPF 1010 receiving the user data from the DN 140 may determine the UPF instance to which the user data is to be transmitted. In this case, the slice anchor UPF 1010 may perform allocation in consideration of the maximum date rate for each UPF instance received from the SMF 132 such that traffic is not concentrated on a specific UPF instance or the UPF instance is not overloaded.

According to an embodiment of the disclosure, based on the date rate information received from the SMF 132, the slice anchor UPF 1010 may allocate the user data received from the DN 140 to the UPF instance responsible for at least one network slice. As described above, if user data is allocated to a specific UPF instance, the corresponding UPF instance may transmit the user data to the base station 110.

According to another embodiment of the disclosure, if an additional processing operation is unnecessary for the user data received from the DN 140, the slice anchor UPF 1010 may transmit the user data directly to the base station 110 rather than the UPF instance.

Although the downlink operation of receiving user data from the DN 140 and transmitting the same to the base station 110 has been described above, this may be applied to the uplink operation in the same manner. That is, the slice anchor UPF 1010 may allocate user data transmitted from the base station 110 to the DN 140 to the respective UPF instances 1021, 1022, 1023, ..., 102N.

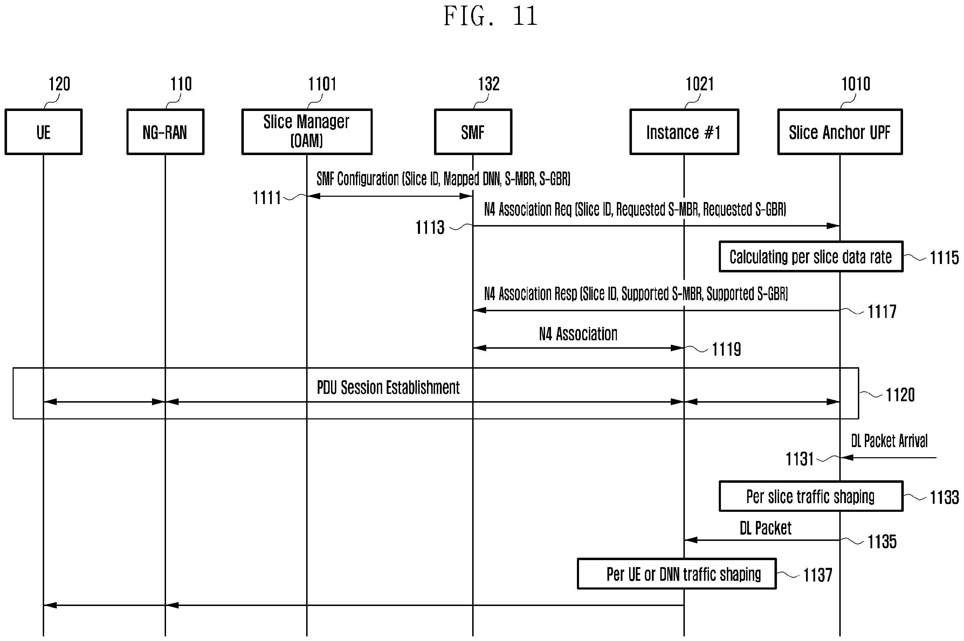

FIG. 11 is a signal flowchart of controlling a date rate in a network slice according to various embodiments of the disclosure.

Prior to describing the embodiment with reference to FIG. 11, FIG. 11 shows additional element, a network slice manager 1101. The network slice manager 1101 may be referred to as a "slice manager", and may be configured as one NF. Accordingly, the slice manager 1101 may also be implemented as an operation & maintenance (OAM) device as illustrated in FIG. 11.

In step 1111, the SMF 132 may receive SMF configuration information through a slice manager 1101 that is an NF for managing network slices, for example, OAM or PCF/UDM. The SMF configuration information may include an identifier of the slice (S-NSSAI) to which the SMF 132 belongs, a data network name (DNN) mapped to the slice, and a maximum date rate (NW slice aggregate maximum bit date) (NS-AMBR) to be applied to each network slice. In addition, the SMF configuration information may include information about the anchor UPF 1010 for network slice rate control, for example, a network function name (NF name), an access address, and the like.

In step 1113, the SMF 132 may request establishment of an N4 association to the slice anchor UPF 1010 in order to control the slice anchor UPF 1010 among the UPFs belonging to the network slice. This request message may include an identifier of a target network slice (S-NSSAI), a DNN mapped to the network slice, the maximum date rate per network slice to be applied in the UPF (requested NS-AMBR), and a guaranteed date rate per network slice to be applied in the UPF (requested NS-GBR). In addition, according to an embodiment of the disclosure, an indicator indicating that the corresponding UPF, that is, the slice anchor UPF 1010, should operate as an anchor for other UPFs in order to control the rate of the network slice may be included. According to various embodiments of the disclosure, information (NF name, IP address, date rate per slice for each UPF, etc.) about other UPFs with which the slice anchor UPF 1010 must further interwork, for example, the UPF instances 1021, 1022, 1023, ..., 102N illustrated in FIG. 2, may be included.

In step 1115, the slice anchor UPF 1010 may identify whether or not the rate per network slice requested by the SMF 132 can be provided in consideration of its own maximum quota, the current load status, the status of the interlocked UPFs, for example, the UPF instances 1021, 1022, 1023, ..., 102N, configurations, and the like. If the rate per network slice requested by the SMF 132 is difficult to provide, the anchor UPF 1010 may calculate the maximum rate that the anchor UPF 1010 can provide.

In step 1117, the slice anchor UPF 1010 may transmit an association response message in response to the N4 association request of the SMF 132. Through the association response message, the anchor UPF 1010 may respond to the SMF 132 with a date rate per network slice supported by itself, that is, the anchor UPF 1010. According to an embodiment of the disclosure, the association response message may include an identifier of the network slice to be targeted (S-NSSAI), a DNN mapped to the network slice, the maximum date rate per network supported in the slice anchor UPF 1010 (requested NS-AMBR), and a guaranteed date rate per network slice supported in the slice anchor UPF 1010 (requested NS-GBR).

In step 1119, if an additional UPF supporting traffic processing, routing, etc. between the slice anchor UPF 1010 and the NG-RAN 110 is needed, the SMF 132 may select an additional UPF and establish an N4 association as necessary. Referring to FIG. 10, the N4 association may be established with at least one of the additional UPF instances 1021, 1022, 1023, ..., 102N.

When a process of establishing a PDU session between the terminal 120, the NG-RAN 110, and the core network 5GC is performed in step 1120, the SMF 132 may perform access control in consideration of the network slice information. If it is determined that the load status of the current slice anchor UPF 133 exceeds or is likely to exceed the maximum date rate per network slice, the SMF 132 may reject the session establishment request.

If a downlink (DL) packet is received for PDU sessions belonging to the network slice in step 1131, the slice anchor UPF 1010 may identify whether or not the date rates of the packets currently being processed by itself for a specific network slice (aggregated bit rate per slice) exceeds the previously configured maximum date rate per network slice in step 1133. If the data rate does not exceed the configured maximum date rate per network slice, the slice anchor UPF 1010 may forward the packet to the next hop in step 1135. For example, if the UPF has a hierarchical structure of two or more levels, the next hop may be UPF instance #1 (1021) as illustrated in FIG. 11. According to another embodiment, even in the case where the UPF has a hierarchical structure of two or more levels, if the slice anchor UPF 1010 is able to directly process the packet without further processing, the UPF may transmit the same to the NG-RAN 110. According to another embodiment, if the data rate exceeds the configured maximum date rate per network slice, the slice anchor UPF 1010 may discard the downlink packet.

In step 1137, UPF instance #1 (1021), which is the second UPF, may process a downlink (DL) packet according to UE-AMBR and session-AMBR. Thereafter, the processed downlink packet may be transmitted to the terminal 120 through the base station 110.

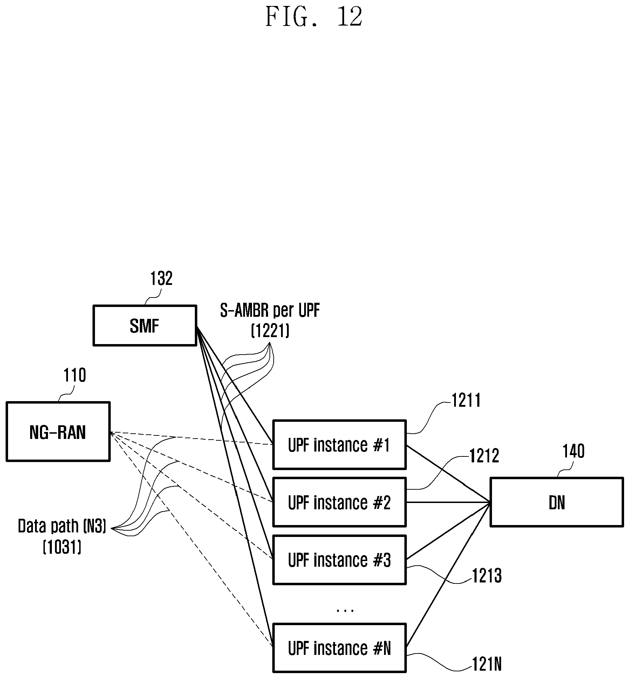

FIG. 12 is a diagram illustrating an example of a configuration for controlling a date rate in a network slice according to an embodiment of the disclosure.

Referring to FIG. 12, in comparison with FIG. 10, the slice anchor UPF is not included. Specifically, a plurality of UPF instances 1211, 1212, 1213, ..., 121N may be included between the base station 110 and the DN 140. In addition, as described above, in FIG. 12, only the plurality of UPF instances 1211, 1212, 1213, ..., 121N and the SMF 132 are illustrated in explaining the network slice. In FIG. 12, reference numerals of the plurality of UPF instances 1211, 1212, 1213, ..., 121N are different from those in FIG. 10 in order to distinguish the same from the case having an anchor. Therefore, the plurality of UPF instances 1211, 1212, 1213, ..., 121N illustrated in FIG. 12 may actually perform the same operation as the plurality of UPF instances 1021, 1022, 1023, ..., 102N described with reference to FIG. 10.

According to the example in FIG. 12, the base station 110 may establish data paths 1031 with a plurality of UPF instances 1211, 1212, 1213, ..., 121N for transmitting and receiving data using an N3 interface. In FIG. 12, the reference numeral for the data paths is the same as that in FIG. 10 above. In addition, the SMF 132 may establish the above-described N4 interface 1221 with the plurality of UPF instances 1211, 1212, 1213, ..., 121N. It should be noted that the reference number of the N4 interface is different from that used in FIG. 10 because a slice anchor UPF is not provided. The SMF 132 may inform maximum date rate (S-AMBR) information for each network slice for each UPF using the configured N4 interface 1221 with the plurality of UPF instances 1211, 1212, 1213, ..., 121N.

If downlink data to be provided to the user equipment 120 is generated, the DN 140 may transmit the downlink data to the UPF instance serving the user equipment 120, among the plurality of UPF instances 1211, 1212, 1213, ..., 121N. In addition, the DN 140 may receive uplink user data from at least one UPF instance among the plurality of UPF instances 1211, 1212, 1213, ..., 121N.

In addition, like the description with reference to FIG. 10, the NW (network) slice may include the SMF and the UPF in FIG. 12, and, although not shown in FIG. 12, include other NFs such as the AMF and the like.

Then, the operation according to FIG. 12 will be described. According to the embodiment in FIG. 12, in order to control the data rate per NW slice, the SMF 132 may transmit parameters for the maximum date rate per network slice (NW slice aggregated maximum bit rate) to be applied by the UPFs belonging to the network slice to each of the UPF instances 1211, 1212, 1213, ..., 121N through the N4 interface. Based on this, the respective UPF instances 1211, 1212, 1213, ..., 121N may adjust the date rate.

For example, it may be assumed that N (N is a natural number greater than or equal to 2) UPFs belong to one network slice and that the maximum quotas or average loads are similar or the same between the UPFs. In this case, if the maximum date rate of one network slice is M, the maximum date rate per network slice (NW slice aggregated maximum bit rate per UPF), which is configured for each UPF or UPF instance included in one network slice by the SMF 132, may be calculated as a value obtained by dividing M by N. For example, if the maximum date rate of one network slice is M, if two UPFs or UPF instances are included in one network slice, and if the date rate of each UPF or each UPF instance is configured to be the same, the date rate of each UPF or UPF instance may be M/2.

As another example, if the quota/load status differ between the UPFs or if a separate configuration is required, the SMF 132 may perform calculation and configuration such that the sum of the maximum date rates per network slice distributed (allocated) to the respective UPFs becomes M.

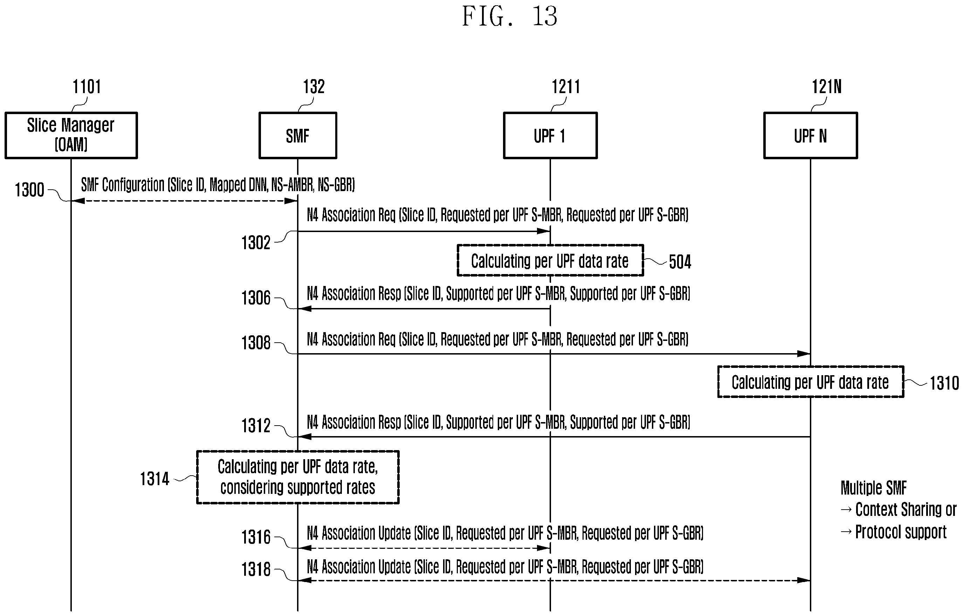

FIG. 13 is a diagram illustrating an operation for applying rate control in units of network slices in various embodiments of the disclosure.

Prior to describing the embodiment with reference to FIG. 13, like the description with reference to FIG. 11, FIG. 13 shows additional element, a network slice manager 301. The network slice manager 301 may be referred to as a "slice manager", and may be configured as one NF. Accordingly, the slice manager 301 may also be implemented as an operation & maintenance (OAM) device as described in FIG. 11. In addition, as described above, the UPF and the UPF instances may be interchangeable. Therefore, hereinafter, a description will be made based on the UPF instances described in FIG. 12 by way of example.

In step 1300, the SMF 132 may receive SMF configuration information through the slice manager 301 or the PCF 133 that is an NF for managing network slices, or/and the UDM 155. The SMF configuration information may include an identifier of the network slice (S-NSSAI) to which the SMF belongs, a data network name (DNN) mapped to the network slice, and a maximum date rate NS-AMBR (NW slice aggregate maximum bit date) to be applied to each network slice.

In step 1302, the SMF 132 may request establishment of an N4 association to control the one of the UPF instances belonging to the network slice, for example, the first UPF instance (UPF instance #1) 1211. To this end, the N4 association establishment request message may include an identifier of a target network slice (S-NSSAI), a DNN mapped to the network slice, the maximum date rate per network slice (requested NS-AMBR) to be applied in the first UPF instance 1211, and a guaranteed date rate per network slice (requested NS-GBR) to be applied in the first UPF instance 411.

In step 1304, the first UPF 1211 may identify whether or not the data rate per network slice requested by the SMF 132 can be provided in consideration of its own maximum quota, the current load status, configurations, and the like. If the data rate per network slice requested by the SMF 132 is difficult to provide, the first UPF 1211 may calculate the maximum rate that the UPF 1211 can provide.

In step 1306, the first UPF 1211 may transmit an N4 association response message in response to the N4 association request of the SMF 132. Through the N4 association response message, the first UPF may respond to the SMF 132 with a date rate per network slice supported by itself. In addition, the N4 association response message may include an identifier of the network slice to be targeted (S-NSSAI), a DNN mapped to the network slice, the maximum date rate per network (requested NS-AMBR) supported in the first UPF 1211, and a guaranteed date rate per network slice (requested NS-GBR) supported in the first UPF 1211.

Steps 1308, 1310, and 1312 may be the same as steps 1302 to 1306 described above. However, they are different therefrom in that the SMF 132 performs an operation with the N^{th} UPF 121N. In addition, if the first UPF 1211 and the N^{th} UPF 121N are included in the same network slice, that is, if several UPFs are included in the network slice, operation may be the same. However, parameters to be used may be different between the UPFs depending on the characteristics of the first UPF 1211 and the N^{th} UPF 121N.

In step 1314, the SMF 132 may collect the supported date rates per network slice received from two or more UPFs belonging to one network slice. Thereafter, the SMF 132 may identify whether or not it is different from that distributed and requested by itself or whether or not additional change is required.

If it is necessary to further change or update the configuration for each network slice for specific UPFs, the SMF 132 may perform a process of updating the N4 association in steps 1316 and 1318. In this case, the parameters to be changed may include the maximum date rate per network slice (Requested NS-AMBR) to be supported by the UPF and the guaranteed date rate per network slice (Requested NS-GBR) to be supported by the UPF, which are calculated in step 1314, and an identifier of the corresponding network slice and a mapped DNN may be transmitted together.

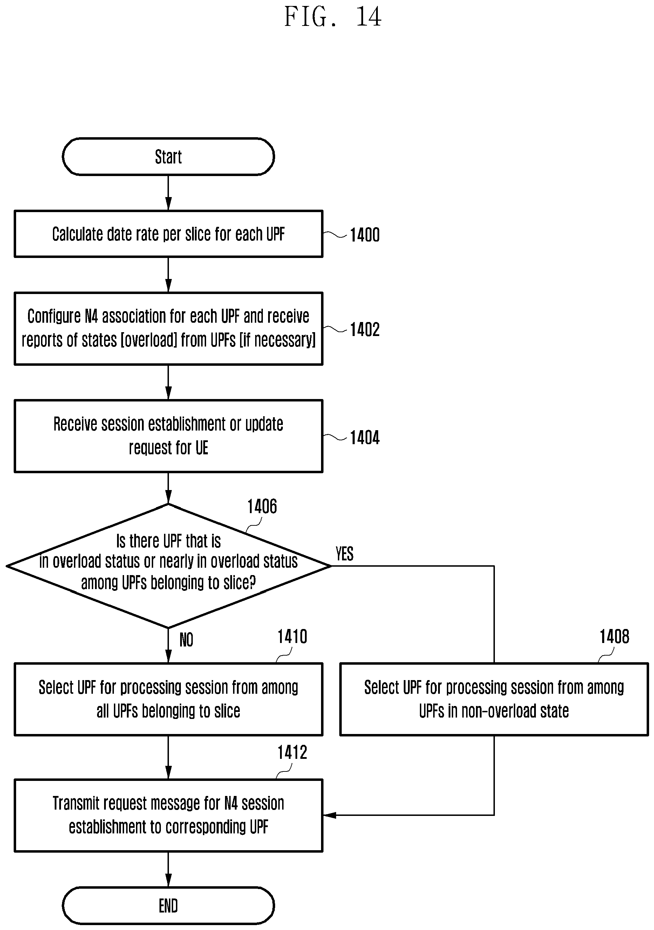

FIG. 14 is a flowchart illustrating a case in which an SMF performs date rate control in units of network slices according to various embodiments of the disclosure.

In step 1400, the SMF 132 may calculate a date rate per network slice (NS-AMBR or NS-GBR) for each UPF included in one network slice.

In step 1402, the SMF 132 may configure network slice control information for each UPF through N4 association establishment or/and update. This operation may be an operation to consider the date rate required for each network slice and the current load status of each UPF if two or more UPFs are included in one network slice as described with reference to FIG. 13 above. In addition, the SMF 132 may receive information including the load status from a specific UPF or receive information indicating that an overload has occurred. The SMF 132 may temporarily exclude the UPF that is in the overload status or nearly in the overload status from the targets during a UPF selection process for processing the session belonging to the network slice. If a specific UPF, which was in the overload status or nearly in the overload status, returns to the normal status, the UPF restored to the normal status may be included in the candidate set as a candidate in the UPF selection process for processing data in the network slice.

In step 1404, the SMF 132 may receive a session establishment or session update request for the UE. The session for which the SMF 132 receives a request for session establishment and session update may be included in the network slice.

In step 1406, the SMF 132 may identify whether or not there is a UPF that is in the overload status or nearly in the overload status, among the UPFs belonging to one network slice. The SMF 132 may use a predetermined threshold value when identifying whether or not there is a UPF that is in the overload status or nearly in the overload status, among the UPFs. For example, the date rate that can be processed in one UPF may be L, and a threshold value may be configured as 90% of L, 95% of L, or the like. The threshold for each UPF may be stored in the SMF 132, may be stored in the corresponding UPF, or may be included in both of them. In the case where the UPF has a threshold, the SMF 132 may receive a report of the near-overload status or the overload status from at least one specific UPF. As another example, if the UPF does not have a threshold, a load status update message may be generated and reported to the SMF 132. Accordingly, the SMF 132 may identify that the UPF is nearly in the overload status or in the overload status using the threshold of the corresponding UPF.

For the release of the overload status, a separate second threshold for the overload release may be configured, or the overload status threshold may be used. In the case of using the overload threshold, the overload status may be identified by identifying whether or not the overload threshold is exceeded. In addition, the overload release may be identified if the load status is lower than the overload status threshold. In the case where one threshold is used as described above, if the amount of load fluctuates in the overload status, the overload status and the normal status (overload release status) may alternate. Accordingly, if the overload threshold is a first threshold, a second threshold for returning to the normal status may be separately configured. In this case, the second threshold value may be generally configured to be lower than the first threshold value.

For example, if the first threshold for identifying the overload status is configured as 95% of the throughput in a specific UPF, the second threshold for identifying the normal status may be configured as 90% of the throughput. It should be noted that the above-described thresholds and examples thereof are provided to help the understanding of the disclosure and are not intended to limit the disclosure.

If one or more UPFs are in the overload status or in the near-overload status (YES in step 1406) as a result of the identification in step 1406, the SMF 132 may select a UPF for processing the session from among the UPFs, excluding the same from all the UPFs belonging to the network slice in step 1408.

If there is no UPF that is the overload status or in the near-overload status (NO in step 1406) as a result of the identification in step 1406, the SMF 132 may select a UPF for processing the session from among all the UPFs belonging to the network slice in step 1410.

Thereafter, the SMF 132 may transmit a request message for N4 session establishment to the UPF selected in step 1412.

Meanwhile, if user traffic (user plane packet) is transmitted between the UPFs or between the UPF and the NG-RAN 110, it may have to pass through several transmission devices (switches or routers) on the way through the path. The NFs defined in the 3GPP standard, for example, devices (or instances) such as the UPF 133, the NG-RAN 110, the SMF 132, the AMF 151, and the like may be aware of information about the terminal 120 and the network slice to which the PDU session belongs. However, the above devices is unable to know the information about the network slice because the switch or router through which the packet actually flows does not follow the 3GPP standard. A method for applying packet processing to each network slice is required in the case where a packet belonging to a specific network slice has a high priority, where urgent process is required, or the like.

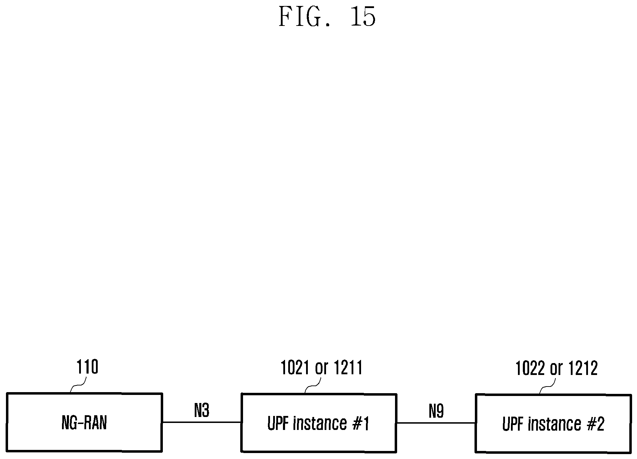

FIG. 15 is a diagram illustrating an example of a connection between UPFs or between a UPF and an NG-RAN according to various embodiments of the disclosure.

Similarly to the above embodiments, in the description of FIG. 15, the UPF or the UPF instance may be an NF or an NF device performing the same operation. A description will be made below based on the UPF instance by way of example for convenience of explanation, as described above. However, the following description may be applied in the same manner to the case where the UPF is provided.

Referring to FIG. 15, as described above, UPF instance #1 (1021 or 1211) and UPF instance #2 (1022 or 1212) may be connected through an N9 interface. Connections between the UPFs, between UPF instances, or between the UPF and the UPF instance may be performed using the N9 interface described above. In addition, as illustrated in FIG. 15, the NG-RAN 110 and the UPF instance #1 (1021 or 1211) may be connected through an N3 interface. Although UPF instance #1 is illustrated in FIG. 15, the NG-RAN 110 and all UPFs or the NG-RAN 110 and all UPF instances may be connected through the N3 interface.

Meanwhile, FIG. 15 illustrates that UPF instance #1 (1021 or 1211) and UPF instance #2 (1022 or 1212) are directly connected and that the NG-RAN 110 and UPF instance #1 (1021 or 1211) are directly connected. However, the interface between UPF instance #1 (1021 or 1211) and UPF instance #2 (1022 or 1222) and between the NG-RAN 110 and UPF instance #1 (1021 or 1211) may be configured as several transport networks (switches or routers), and the protocol defined by 3GPP (generally, GTP-U is used in N3/N9) may not be applied thereto.

In an embodiment of the disclosure, when transmitting a packet between UPF-UPF or UPF-NG-RAN, an IP header may be used to enable the switch or router to recognize information about the network slice to which the packet belongs.

The information of the network slice to which the packet belongs may be one of an identifier of the network slice, a part of a network identifier, or a value mapped to the network slice identifier. To illustrate this more specifically, one of the following values may be used.
▪ All S-NSSAI values
▪ SST (Slice/Service Type)
▪ SD (Slice Differentiator)
▪ Mapped values

When the above-described UPF (1021, 1211, etc.) or the NG-RAN 110 transmits a packet to the next hop, for example, a UPF or an NG-RAN, network slice information may be notified as follows using the IP header.
- IPv4: DSCP marking with slice information
- IPv6: Flow labeling with slice information

The protocol to be used may be determined from among IPv4/IPv6 by network configurations. A switch (not shown in the drawing) or a router (not shown in the drawing) that received an IP packet including the network slice information may be aware of the network slice to which the packet belongs using the information included in the IP header and perform packet transmission control (rate control, priority control, path control, etc.) according to the packet processing policy for each slice configured in the switch or the router.

In another embodiment of the disclosure, a GTP-U header in the N3/N9 section may be used to inform the information of the network slice to which the packet belongs. The GTP-U Header may include a service class indicator (SCI) field. When the UPF or NG-RAN transmits a packet to the next hop, for example, a UPF or NG-RAN, the network slice information (slice Information or network slice information) in the above embodiment may be included in the SCI field of the GTP-U header. In general, a switch or router in the intermediate path does not process the GTP-U header. According to various embodiments of the disclosure, if packet processing for each slice is required, the SCI field included in the GTP-U header must be detected by an intermediate switch/router, so if the slice information is included in the GTP-U header, the UPF or NG -RAN may include information indicating that the SCI field of the GTP-U header needs to be processed or that a packet processing function for each slice is required in the IP packet header including the GTP-U packet as follows.
- IPv4: DSCP marking with "per slice packet processing is needed" or "SCI in GTP-U header" indication
- IPv6: Flow labeling with "per slice packet processing is needed" or "SCI in GTP-U header" indication

A switch or router on the N3/N9 transmission path may receive an IP packet, read the SCI field of the GTP-U header if the above information is configured in the IP header to recognize the network slice to which the packet belongs, and perform packet transmission control (rate control, priority control, path control, etc.) according to the packet processing policy for each slice configured in the switch or router.

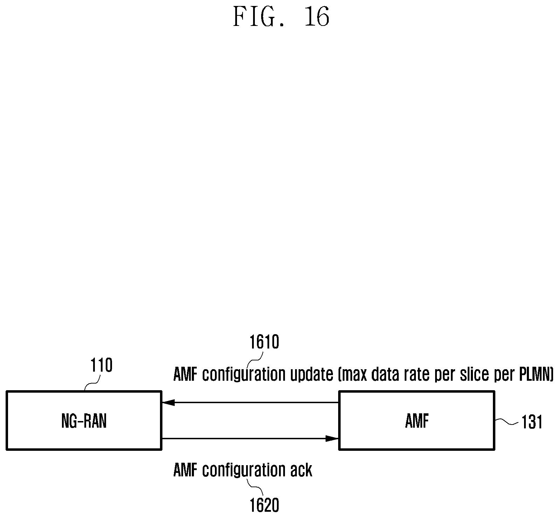

FIG. 16 is a diagram illustrating a method for controlling a quota for each network slice in an environment in which a RAN is shared according to an embodiment of the disclosure.

The AMF 131 may transmit an AMF configuration update message (NG-AP) to the NG-RAN 110 in order to transmit configuration information of the AMF 131 to the NG-RAN 110 in step 1610. The AMF configuration update message may include a PLMN support list supported by the AMF 131. In addition, the PLMN support list may include an identifier of a network slice supported for each PLMN ID and a list of maximum date rates to be applied to respective network slices.

The NG-RAN 110 may receive the above message and transmit an AMF configuration ack message indicating that the update request from the AMF 131 has been processed. If the NG-RAN 110 receives an uplink packet from the terminal or receives a downlink packet from at least one UPF included in the network slice, the NG-RAN 110 may perform control such that the maximum date rate to be applied to each network slice is not exceeded.

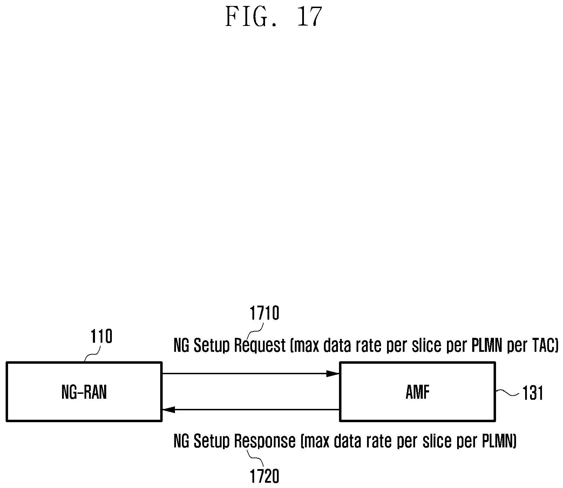

FIG. 17 is a diagram illustrating a method for controlling a quota for each network slice in an environment in which a RAN is shared according to an embodiment of the disclosure.

The NG-RAN 110 may transmit an NG setup request message (NG-AP) to the AMF 131 in order to transmit its own configuration information to the AMF 131 in step 1710. The NG setup request message may include a PLMN support list for each tracking area code (TAC) supported by the NG-RAN 110, and the PLMN support list may include an identifier of a network slice supported for each PLMN ID and a list of maximum date rates to be applied to respective network slices.

The AMF 131 may store the configuration information of the NG-RAN 110 and transmit an NG setup request (setup response) message (NG-AP) to the NG-RAN 110 in order to transmit the configuration information of the AMF 131 to the NG-RAN 110 in step 1720. The NG setup request message may include a PLMN support list supported by the AMF 131. The PLMN support list may include an identifier of a network slice supported for each PLMN ID and a list of maximum date rates to be applied to respective network slices. If the maximum date rate for each network slice stored in the NG-RAN is different from the value received from the AMF 131, the NG-RAN may update the same with the value received from the AMF 131. If the NG-RAN 110 receives an uplink packet from the terminal or receives a downlink packet from the UPF, the NG-RAN 110 may perform control such that the maximum date rate to be applied to each network slice is not exceeded.

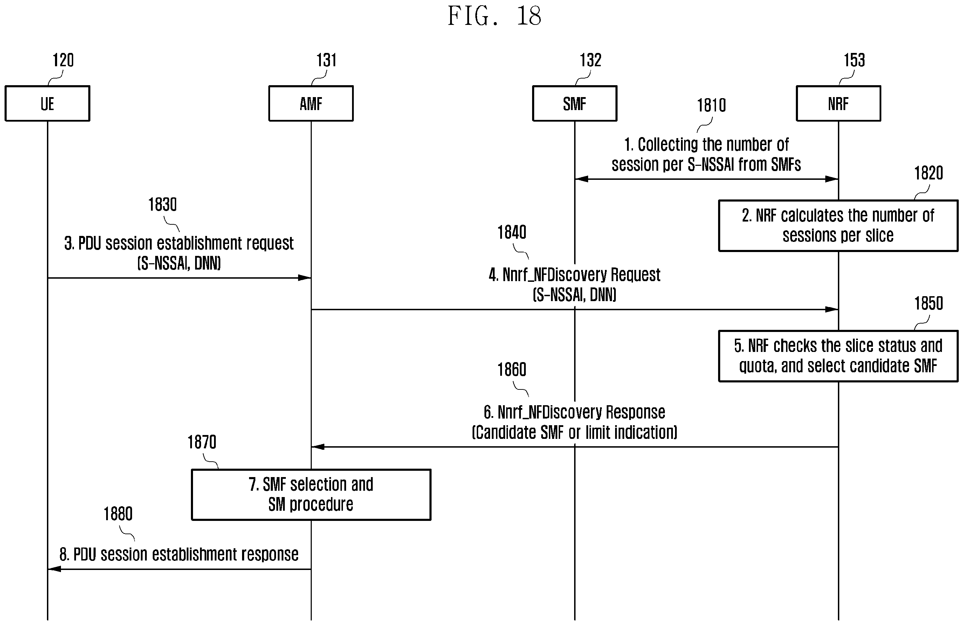

FIG. 18 is a signal flowchart of controlling a quota for each network slice according to another embodiment of the disclosure.

The following embodiment will be described on the assumption of the case including the NRF 153 as illustrated in FIG. 18. However, the operation according to the following embodiment may be performed using an NF that collects network status information, provides a selection function in the network, or manages a policy for service control, instead of the NRF 153. Therefore, the NF should not necessarily be an NFR, and the operations described below may be configured to be performed by one NF or two different NFs. For example, it may be configured such that NF1 performs some of the operations described below and such that NF2 performs the remaining operations, excluding the operations performed by NF1 from the operations described below. In addition, the entire operation of the NRF may be configured to be performed in another specific NF. Hereinafter, a description will be made based on the case in which the NRF performs the operation for convenience of description.

In step 1810, the SMF(s) (or SMF instance(s)) belonging to specific network slices may respectively transmit their own network slice (S-NSSAI) status information to the NRF 153. For example, if a first SMF (or first SMF instance) belongs to a first network slice and if a second SMF (or second SMF instance) belongs to a second network slice, all of the SMFs may respectively transmit their own network slice status information to the NRF 153. In this case, the status information transmitted by the SMF(s) may include the number of currently established sessions (PDU sessions) for each network slice and aggregated data rates for respective network slices collected from UPF (not shown in FIG. 18). In addition, if a plurality of DNNs belongs to the network slice, the status information may be separated and transmitted for each DNN Information exchange between the SMF 132 and the NRF 153 may be supported by a method of including the information in a service in which the SMF 132 updates its own status information, that is, an NNRF_NFManagement_NFUpdate request. In another embodiment, the status information may be transmitted by an NF heart-beat operation in which the SMF 132 periodically transmits the same. In another embodiment, the NRF 153 may transmit, to the SMF 132, a subscribe message using EventExposure instructing to report the status information of a specific network slice, and if a status reporting condition or period is satisfied, the SMF 132 may transmit the status information to the NRF 153 through an NSMF_EventExposure_Notify message. If the information includes status information of the network slice, a validity time for determining the validity of the status information of the corresponding network slice may be included.

Meanwhile, the NRF 153 may transmit, to the corresponding SMF(s), a request (or a request message) instructing to report status information for each network slice in order to collect status information for each network slice or increase the accuracy of calculation. In this case, for example, if the information calculated by or stored in the NRF 153 does not match or is significantly different from the newly collected information, or if the validity time of the existing information expires, the NRF 153 may transmit, to the corresponding SMF(s), a request (or a request message) instructing to report status information for each network slice in order to update the information.

Meanwhile, the SMF 132 may include the maximum quota (e.g., the maximum number of available PDU sessions, the maximum aggregated data rate, etc.) to be provided by the network slice to which the SMF 132 belongs in an NF profile or information similar thereto and transmit the same to the NRF 153 during the NF registration or NF update process. The maximum quota information may be a value determined by subscription information received through a UDM (not shown in FIG. 18) or a policy received from a PCF (not shown in FIG. 18). As another example, the SFM 132 may configure (notify of) the maximum quota capable of being provided by the network slice for the NRF 153 using a method such as an OAM (operation and management) function or the like.

In step 1820, the NRF 153 may calculate status information per network slice using the information received from the SMF 132. If two or more SMFs are included in the network slice, a calculation of adding information reported by the SMFs to each other may be made. If a specific network slice reaches the limit of a quota (the maximum number of access sessions or the aggregated date rate) capable of being configured in the network slice, or if a notification condition (notification period, etc.) is satisfied, the NRF 153 may actively inform other NFs (e.g., the AMF, etc.) of the same. This operation may be performed for the NFs that requested reception of a notification about the status information of the network slice (S-NSSAI or a combination of S-NSSAI and DNN) to the NRF 153 through NFStatusSubscribe. When the NRF 153 transmits the status information, an NFStatusNotify operation may be used.

Steps 1810 and 1820 are NF-specific operations, may be always performed independently of a request such as PDU session establishment/modification of the terminal 120 or the like, which follows the same, and may be performed with a modified operation time or independently of step 1830 of the flowchart in FIG. 18. That is, steps 1810 and 1820 in FIG. 18 do not have to precede step 1830, and may be performed according to a specific period or may not be performed prior to step 1830.

In step 1830, the first terminal 120 may transmit a PDU session establishment request for a specific network slice and DNN, which may be transmitted to the AMF 131 through the NG-RAN (not shown in FIG. 18).

In step 1840, the AMF 131 may transmit, to the NRF 153, an Nnrf_NFDiscovery request for identifying status information of a specific network slice and receiving SMF candidate information, and at this time, the S-NSSAI and DNN received from the first terminal 120 may be included therein. If the AMF 131 stores status information of a specific network slice through step 1820 or a method of obtaining the status information of a specific network slice, this step may be omitted. In addition, the AMF 131 may include, in the request message, status information of the current network slice (the number of currently registered terminals/subscribers, the number of currently established sessions for each network slice, the aggregated data rate, etc.) recognized by itself and transmit the same to the NFR 153.

In step 1850, the NRF 153 may identify the status information of the network slice according to the request of the AMF 131. In this case, the network slice status information calculated during steps 1810 and 1820 may be used. If the status of the requested network slice (or a combination of the network slice and the DNN) does not reach the maximum value of a quota, the NRF 153 may select SMF candidates (SMF set IDs or identifiers and addresses of candidate SMFs, etc.) available in the corresponding network slice. If the request message transmitted by the AMF 131 includes network slice status information in step 1840, the NRF 153 may further use the same to calculate or correct the network slice status information, thereby increasing accuracy. Even if the AMF 131 does not explicitly include the network slice status information in the request message, the NRF 153 may estimate the status of the corresponding network slice using the number of currently generated requests.

In step 1860, the NRF 153 may transmit an MPI_NFDiscovery response to the AMF 131. If the maximum value of the network slice quota is reached in step 1850, the NRF 153 may include an indication indicating this. Otherwise, the SMF candidate information selected in step 1850 may be included in the response. If the maximum quota value is reached, step 1870 may be omitted.

In step 1870, the AMF 131 may select an SMF using the SMF candidate information received in step 1860 and perform the remaining session management (SM) procedures.

In step 1880, the AMF 131 may transmit a response to the PDU session establishment request to the first terminal 120. If the maximum network slice quota value is reached in step 1860, the response transmitted to the first terminal 120 may include a cause or indication stating that the request is rejected because the maximum network slice quota value is reached or because there is no idle resource in the corresponding network slice.

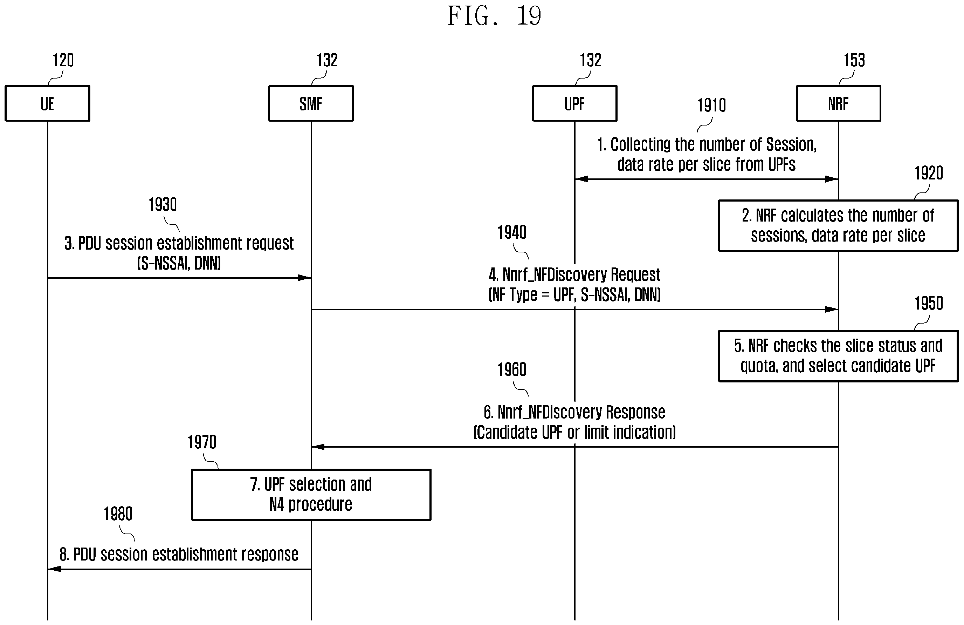

FIG. 19 is a signal flowchart of controlling a quota for each network slice according to another embodiment of the disclosure.

The following embodiment will be described on the assumption of the case including the NRF 153 as illustrated in FIG. 19. However, the operation according to the following embodiment may be performed using an NF that collects network status information, provides a selection function in the network, or manages a policy for service control. Therefore, the NF should not necessarily be an NFR, and the operations described below may be configured to be performed by one NF or two different NFs. For example, it may be configured such that NF1 performs some of the operations described below and such that NF2 performs the remaining operations, excluding the operations performed by NF1 from the operations described below. In addition, the entire operation of the NRF may be configured to be performed in another specific NF. Hereinafter, a description will be made based on the case in which the NRF performs the operation for convenience of description.

In step 1910, the UPF(s) (or UPF instance(s)) belonging to specific network slices may respectively transmit their own network slice (S-NSSAI) status information to the NRF 153. For example, if a first UPR (or first UPF instance) belongs to a first network slice and if a second UPF (or second UPF instance) belongs to a second network slice, all of the UPFs may respectively transmit their own network slice status information to the NRF 153. In this case, the status information transmitted by the UPF(s) may include the number of currently established sessions (PDU sessions) for each network slice and aggregated data rates. In addition, if a plurality of DNNs belongs to the network slice, the status information may be separated and transmitted for each DNN Information exchange between the UPF 133 and the NRF 153 may be performed by a method of including the information in a service in which the UPF 133 updates its own status information, that is, an MPI NFManagement NFUpdate request. As another method, the status may be transmitted by an NF heart-beat operation in which the UPF 133 periodically transmits the same. As another method, the NRF 153 may transmit, to the UPF 133, a subscribe message using EventExposure instructing to report the status information of a specific network slice, and if a status reporting condition or period is satisfied, the UPF 133 may transmit the status information to the NRF 153 through an MPI_EventExposure_Notify message. If the information includes status information of the network slice, a validity time for determining the validity of the corresponding information may be included.

Meanwhile, the NRF 153 may transmit, to the corresponding UPF(s), a request for instructing to report status information for each network slice in order to collect status information for each network slice or increase the accuracy of calculation. In this case, for example, if the information calculated by or stored in the NRF 153 does not match or is significantly different from the newly collected information, or if the validity time of the existing information expires, the NRF 153 may transmit, to the corresponding UPF(s), a request (or a request message) for instructing to report status information for each network slice in order to update the information.

Meanwhile, the UPF 133 may include the maximum quota (i.e., the maximum number of available PDU sessions, the maximum aggregated data rate, etc.) to be provided by the network slice to which the UPF 133 belongs in the information such as an NF profile and transmit the same to the NRF 153 during the NF registration or NF update process. The maximum quota information may be a value determined by N4 association information received through the SMF (not shown in FIG. 19). As another example, the UPF 133 may configure (notify of) the maximum quota to be provided by the network slice for the NRF 1530 using a method such as an OAM (operation and management) function or the like.

step 1920, the NRF 153 may calculate status information per network slice using the information received from the UPF 133. If two or more UPFs are included in the network slice, a calculation of adding information reported by the UPFs to each other may be made. If a specific network slice reaches the limit of a quota (the maximum number of access sessions or the aggregated date rate) acceptable in the network slice, or if a notification condition (notification period, etc.) is satisfied, the NRF 153 may actively inform other NFs (e.g., the AMF, the SMF, etc.) of the same. This operation may be performed for the NFs that requested reception of a notification about the status information of the network slice (S-NSSAI or a combination of S-NSSAI and DNN) to the NRF 153 through NFStatusSubscribe. When the NRF 153 transmits the status information, an NFStatusNotify operation may be used.

Steps 1910 and 1920 are NF-specific operations, may be always performed independently of a request such as PDU session establishment/modification of the terminal 120 or the like, which follows the same, and may be performed with a modified operation time or independently of step 1830. That is, steps 1910 and 1920 in FIG. 19 do not have to precede step 1930, and may be performed according to a specific period or may not be performed prior to step 1930.

In step 1930, the first terminal 120 may transmit a PDU session establishment request for a specific network slice and DNN, which may be transmitted to the AMF (not shown in FIG. 19) and the SMF 132 through the NG-RAN (not shown in FIG. 19).

In step 1940, the SMF 132 may transmit, to the NRF 153, an MPI_NFDiscovery request for identifying status information of a specific network slice and receiving UPF candidate information, and at this time, the S-NSSAI and DNN received from the first terminal 120 may be included therein. If the status information of a specific network slice is stored through a method such as step 1920 or the like, this step may be omitted. In addition, the SMF 132 may include, in the request message, status information of the current network slice (the number of currently registered terminals/subscribers, the number of currently established sessions for each network slice, the aggregated data rate, etc.) recognized by itself.

In step 1950, the NRF 153 may identify the status information of the network slice according to the request of the SMF 132, and in this case, the network slice status information calculated during steps 1910 and 1920 may be used. If the status of the requested network slice (or a combination of the network slice and the DNN) does not reach the maximum value of a quota, the NRF 153 may select UPF candidates (UPF set IDs or identifiers and addresses of candidate UPFs, etc.) available in the corresponding network slice. If the request message transmitted by the SMF 132 includes network slice status information in step 1940, the NRF 153 may further use the same to calculate or correct the network slice status information, thereby increasing accuracy. Even if the SMF 132 does not explicitly include the network slice status information in the request message, the NRF 153 may estimate the status of the corresponding network slice using the number of currently generated requests.

In step 1960, the NRF 153 may transmit an MPI_NFDiscovery response to the SMF 132. If the maximum value of the network slice quota is reached in step 1950, the NRF 153 may include an indication indicating this. Otherwise, the UPF candidate information selected in step 1950 may be included in the response. If the maximum quota value is reached, step 1970 may be omitted.

In step 1970, the SMF 132 may select a UPF using the UPF candidate information received in step 1960 and perform the remaining N4 and session management (SM) procedures.

In step 1980, the SMF 132 may transmit a response to the PDU session establishment request to the first terminal 120. If the maximum network slice quota value is reached in step 1960, the response transmitted to the first terminal 120 may include a cause or indication stating that the request is rejected because the maximum network slice quota value is reached or because there is no idle resource in the corresponding network slice. In this case, this information may also be transmitted to the AMF separately from the PDU session establishment response.

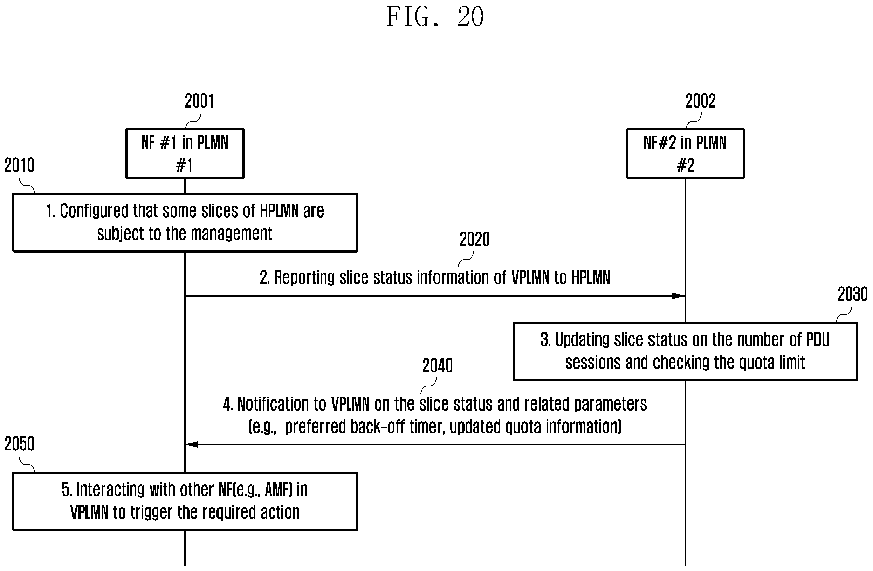

FIG. 20 is a diagram illustrating an operation of roaming or exchanging network slice status information between operators according to an embodiment of the disclosure.

Before describing FIG. 20, the elements in FIG. 20 will be briefly described. In the disclosure of FIG. 20, each NF may be any type of NF that collects network slice status information (the number of currently connected terminals for each network slice, the number of current sessions for each network slice, a current data rate for each network slice, etc.) or provides a network slice quota (or maximum quota) management function. For example, a separate NF (e.g., a slice quota management function (SQMF) device) that provides the above function may be provided, or the NF such as the NSSF, the NRF, the PCF, the NWDAF, etc. may be implemented to include all or at least some of the functions described above. In addition, in the disclosure, a description will be made on the assumption that PLMN #1 (2001) is a visiting PLMN of a terminal and that PLMN #2 (2002) is a home PLMN of a terminal (not shown in FIG. 20).

In step 2010, NF#1 (2001) of VPLMN may be configured to provide a network slice management function in consideration of the quota (or maximum quota) in roaming for a specific network slice according to the service level agreement between HPLMN and VPLMN The agreement may include judging (or determining) whether or not to apply the corresponding function when the terminal requests S-NSSAI of the VPLMN mapped for each piece of S-NSSAI of the HPLMN To this end, NF#1 (2001) may exchange information with other NFs in order to collect status information for the target S-NSSAI in the VPLMN For example, NF#1 (2001) may exchange information about the number of current terminals with the AMF, information about the number of sessions with the SMF, and information about the amount of data transmission with the SMF or UPF, for each network slice capable of being provided in its own operator network, and collect and calculate the same.

In step 2020, NF#1 (2001) may transmit a report message for transferring network slice status information to NF#2 (2002) of HPLMN The network slice status information may include the number of currently connected terminals, the number of sessions, and the amount of data transmission for each piece of S-NSSAI. To this end, NF#2 (2002) may perform a subscription process for collecting status information from NF#1 (2001) in advance. Conditions under which NF#1 (2001) reports status information to NF#2 (2002) (for example, reporting if a status value of a specific network slice exceeds a threshold or reporting for a specific period, etc.) may be transmitted to NF#1 (2001) in advance.

In step 2030, NF#2 (2002) may update network slice status information using the information received in step 2020. In addition, it may be determined whether or not an additional action is required due to the current network slice quota. Here, the additional action may include, if the upper limit of the current quota is reached, restricting an additional access terminal or session, restricting a data rate, or informing NF# 1 (2001) of the network slice status information comprehensively determined by itself.

In step 2040, NF#2 (2002) may transmit the network slice status information comprehensively determined by itself and additional parameters for control to NF#1 (2001). At this time, information for the above-mentioned action (restriction of further terminal registration, restriction of further session establishment, restriction of a data rate, etc.) and additional parameters (a preferred back-off timer value to be applied when the request of the terminal is to be denied) may be included. As another example, the network slice status information comprehensively identified by NF#2 (2002) in step 2040 may be reported back to NF#1 (2001).

In step 2050, NF#1 2001 may perform an operation, based on the information received in step 2040. This may include additional information exchange with other NFs (the AMF, the SMF, the UPF, etc.) in the VPLMN (not shown in FIG. 20). For example, if it is necessary to restrict the registration of a new terminal, NF#1 (2001) may inform the AMFs belonging to the network slice of information indicating that the upper limit of the network slice quota is reached. In addition, the back-off timer value may be transmitted together or separately. When it is necessary to restrict new session establishment, NF#1 (2001) may inform the SMFs belonging to the network slice of the information indicating that the upper limit of the network slice quota is reached, and also transmit the back-off timer value together or separately. This operation of NF#1 (2001) may be actively performed by NF#1 (2001) through a notification process, or may be performed through a response if a request is received during the terminal registration or session establishment process.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, various modifications and changes may be made thereto without departing from the scope of the disclosure. Therefore, the scope of the disclosure should not be defined as being limited to the embodiments, but should be defined by the appended claims and equivalents thereof.

### [Industrial Applicability]

The disclosure may be used in providing services to a user device using a network slice in a communication system.

## Claims

1. A method for providing a service to a user device through a first core network slice by a first network function device in a communication system including the first core network slice, the method comprising:
receiving, from a second network function device, management function configuration information of the first core network slice including a quota of the first core network slice;
reporting, to a third network function device, status information of the first core network slice, based on the management function configuration information;
receiving, from the third network function device, parameters for controlling status of the first core network slice; and
controlling access of a terminal that is to use the first core network slice, based on the status information of the first core network slice and the parameters for control.

2. The method of claim 1, further comprising using the management function configuration information of the first core network slice when controlling the access of the terminal.

3. The method of claim 1, wherein the quota includes at least one of the maximum number of subscribers, terminals, and users simultaneously accessible to the first core network slice, the maximum number of simultaneously supported sessions (PDU sessions), the maximum number of simultaneously supported IP flows, the maximum number of simultaneously supported QoS flows, or the maximum number of simultaneously supported GBR flows.

4. The method of claim 1, wherein the management function configuration information includes at least one of a target to be controlled based on the quota, information for searching for the third network function device, and the reporting condition or period.

5. The method of claim 1, wherein the management function configuration information further includes information for accepting or rejecting an access request of the terminal under specific conditions.

6. The method of claim 1, wherein the status information of the first core network slice includes at least one of the number of currently connected terminals, the number of sessions, or the amount of data transmission for each piece of S-NSSAI of the first core network slice.

7. The method of claim 1, wherein the parameters for controlling the status of the first core network slice includes at least one of a threshold of the first core network slice, priority between subscribers, and priority between data network names (DNNs).

8. The method of claim 1, wherein the first core network slice is configured as two or more network function devices constituting a core network of the communication system or two or more network function instances constituting a core network of the communication system.

9. A first network function device for providing a service to a user device, the first network function device comprising:
a network interface configured to communicate with a second network function device, a third network function device, and respective network function devices of the first core network slice;
a memory configured to store information for access control of the first core network slice; and
a controller,
wherein the controller is configured to:
receive, from the second network function device through the network interface, management function configuration information of the first core network slice including a quota of the first core network slice,
store the management function configuration information of the first core network slice in the memory,
report, to the third network function device, status information of the first core network slice, based on the management function configuration information, through the network interface,
receive, from the third network function device through the network interface, parameters for controlling status of the first core network slice, and
control access of a terminal that is to use the first core network slice, based on the status information of the first core network slice and the parameters for control.

10. The first network function device of claim 9, wherein the controller is further configured to use the management function configuration information of the first core network slice when controlling the access of the terminal.

11. The first network function device of claim 9, wherein the quota includes at least one of the maximum number of subscribers, terminals, and users simultaneously accessible to the first core network slice, the maximum number of simultaneously supported sessions (PDU sessions), the maximum number of simultaneously supported IP flows, the maximum number of simultaneously supported QoS flows, or the maximum number of simultaneously supported GBR flows.

12. The first network function device of claim 9, wherein the management function configuration information includes at least one of a target to be controlled based on the quota, information for searching for the third network function device, and the reporting condition or period, and further comprises information for accepting or rejecting an access request of the terminal under specific conditions.

13. The first network function device of claim 9, wherein the status information of the first core network slice includes at least one of the number of currently connected terminals, the number of sessions, or the amount of data transmission for each piece of S-NSSAI of the first core network slice.

14. The first network function device of claim 9, wherein the parameters for controlling the status of the first core network slice includes at least one of a threshold of the first core network slice, priority between subscribers, and priority between data network names (DNNs).

15. The first network function device of claim 9, wherein the first core network slice is configured as two or more network function devices constituting a core network of the communication system or two or more network function instances constituting a core network of the communication system.
